# EUROPEAN PATENT SPECIFICATION

(11) **EP 3 944 600 B1**
(45) Date of publication and mention of the grant of the patent: **23.07.2025**
(21) Application number: 20802377.0
(22) Date of filing: 28.04.2020
(51) Int. Cl.: H04L 9/40, H04M 1/725, H04M 1/724

(54) **DISPLAY METHOD AND DEVICE**
ANZEIGEVERFAHREN UND -VORRICHTUNG
PROCÉDÉ ET DISPOSITIF D'AFFICHAGE

(30) Priority: 08.05.2019 CN 201910380047; 22.05.2019 CN 201910430945
(43) Date of publication of application: 26.01.2022
(73) Proprietor: Huawei Technologies Co., Ltd., Shenzhen, Guangdong 518129 (CN)
(72) Inventor: YE, Yun, Shenzhen, Guangdong 518129 (CN); QIAO, Denglong, Shenzhen, Guangdong 518129 (CN); HUANG, Yigui, Shenzhen, Guangdong 518129 (CN)
(74) Representative: Pfenning, Meinig & Partner mbB
(86) International application number: PCT/CN2020/087349
(87) International publication number: WO 2020/224478

(56) References cited:
- CN-A- 102 546 648
- CN-A- 104 243 415
- CN-A- 104 735 021
- CN-A- 105 487 392
- CN-A- 107 786 621
- CN-A- 107 786 621
- CN-A- 109 525 604
- CN-A- 109 726 545
- US-A1- 2016 080 361
- US-A1- 2018 227 290

## Description

### TECHNICAL FIELD

Embodiments of this application relate to the technical field of terminals, and in particular, to a display method and a device.

### BACKGROUND

With continuous development of communications technologies, electronic devices (such as smartphones) are becoming increasingly popular and diversified. Usability and friendliness of a human-computer interaction interface in which the electronic device interacts with a user are given increasing concern. Therefore, a widget (widget) is increasingly widely used. The widget is a page script that is embedded in another application (application, APP) and that can be executed and rendered. The widget is loaded and run by another APP. The widget may be, for example, a clock widget, a weather widget, a search widget, a stock widget, or a ball game widget. The widget is usually quite small and easy to embed, and is run quickly. Therefore, the widget is widely used on various electronic devices such as a mobile phone, a television set, and a video device, and is in various forms such as a slide, a video, a map, news, and a game. The widget directly displays, to the user, a service or content that the user cares about most.

Based on this, a content display method for a widget needs to be proposed to display various content to the user by using the widget, to improve user experience of using the widget.

US 2016/080361 A1 discloses a framework, which conforms to the OAuth standard, involves a generic OAuth authorization server that can be used by multiple resource servers in order to ensure that access to resources stored on those resource servers is limited to access to which the resource owner consents.

### SUMMARY

The invention is set out in the appended set of claims. Embodiments of this application provide a display method and a device, so that a display method is proposed to improve user experience of using a widget.

According to a first aspect, an embodiment of this application provides a display method, and the method includes:

An electronic device displays a first user interface, and receives, in the first user interface, a first operation of a user, where the first operation is used to control the electronic device to display a second user interface, and the second user interface includes a widget. The electronic device sends a first authentication obtaining request to a first server in response to the first operation of the user, where the first authentication obtaining request includes a first identity authentication token allocated by the first server to the electronic device, the first authentication obtaining request is used to obtain a second identity authentication tokenused to access a second server, the second identity authentication token that needs to be obtained is associated with the first identity authentication token, and the second server is a content provider CP server of the widget. The first server receives the first authentication obtaining request from the electronic device, and the first server determines, based on a prestored association relationship between an identity authentication token allocated by the first server to the electronic device and an identity authentication token used to access the second server, the second identity authentication token associated with the first identity authentication token, and sends a response that is to the first authentication obtaining request and that carries the second identity authentication token to the electronic device. After receiving the response that is to the first authentication obtaining request and that is sent by the first server, the electronic device sends a first content obtaining request to the second server, where the first content obtaining request includes the second identity authentication token, and the first content obtaining request is used to obtain content information to be displayedin the widget. The second server receives the first content obtaining request from the electronic device, and the second server determines, based on configuration information corresponding to each identity authentication token, second configuration information corresponding to the second identity authentication token, obtains content information corresponding to the second configuration information, and sends a first obtaining success response that is to the first content obtaining request and that carries the content information to the electronic device. After receiving the first obtaining success response that is to the first content obtaining request and that is sent by the second server, the electronic device displays the second user interface based on the content information included in the first obtaining success response, where the second user interface includes the widget, and corresponding content information is displayed in the widget.

In this embodiment of this application, the electronic device may obtain, from the first server, the second identity authentication tokenused to access the second server, and may further obtain resource information of the second server based on the second identity authentication token, so that the content information displayed in the widget is more diversified, and user experience of using the widget is improved.

In a possible design, after the electronic device displays the second user interface, the electronic device receives, in the second user interface, a second operation performed by the user on the displayed widget, where the second operation is used to control the electronic device to update the content information displayed in the widget; and the electronic device sends a second content obtaining request to the second server, where the second content obtaining request includes the second identity authentication token and operation information of the second operation, and the second content obtaining request is used to obtain content information corresponding to the operation information of the second operation. The second server receives the second content obtaining request from the electronic device; and after determining that the second identity authentication token is valid, the second server executes the operation information, and sends a second obtaining success response that is to the second content obtaining request and that carries the content information corresponding to the operation information to the electronic device. After receiving the second obtaining success response that is to the second content obtaining request and that is sent by the second server, the electronic device updates, based on the content information included in the second obtaining success response, the content information displayed in the widget.

In this embodiment of this application, the user further performs interaction on the widget, so that user experience of using the widget is improved.

In a possible design, the first identity authentication token of the electronic device is allocated by the first server to a first user account when the electronic device performs registration or login based on the first user account. The electronic device displays a third user interface, where the third user interface includes a user account input area; the electronic device sends a first request to the first server in response to an operation indicating that the user finishes entering the first user account into the user account input area, where the first request is used by the electronic device to log in to or register with the first server, and the first request includes the first user account; and the electronic device receives a response that is to the first request and that is sent by the first server, where the response to the first request includes the first identity authentication token, and the first identity authentication token is allocated by the first server to the electronic device based on the first user account.

In a possible design, if the second identity authentication token included in the second content obtaining request is invalid, the second server sends a content obtaining failure response to the second content obtaining request to the electronic device, and the electronic device receives the content obtaining failure response sent by the second server, and sends a second authentication obtaining request to the first server, where the second authentication obtaining request includes the first identity authentication token, and the second authentication obtaining request is used to re-obtain the second identity authentication tokenused to access the second server; and the first server receives the second authentication obtaining request sent by the electronic device, and the first server redetermines, based on the prestored association relationship between the identity authentication token allocated by the first server to the electronic device and the identity authentication token used to access the second server, the second identity authentication token associated with the first identity authentication token, and sends a response that is to the second authentication obtaining request and that carriesthe redetermined second identity authentication token to the electronic device. After receiving the response that isto the second authentication obtaining request and that is sent by the first server, the electronic device re-sends the second content obtaining request to the second server, where a response to the second content obtaining request includes a reallocated second identity authentication token, and the re-sent second content obtaining request includes the reallocated second identity authentication token and the operation information of the second operation.

In a possible design, the first authentication obtaining request or the second authentication request further includes an identifier of the second server; and when the first server determines the second identity authentication token based on the first identity authentication token and the prestored association relationship between the identity authentication token allocated by the first server to the electronic device and the identity authentication token used to access the second server, the first server may determine, based on the first identity authentication token and the prestored association relationship between the identity authentication token allocated by the first server to the electronic device and the identity authentication token used to access the second server, one or more identity authentication tokens associated with the first identity authentication token.

The first server determines, based on the identifier of the second server, the second identity authentication token from the one or more identity authentication tokens associated with the first identity authentication token.

In this embodiment of this application, the first server sendsthe second identity authentication token required by the electronic device to the electronic device, so that a waste of transmission resources is avoided.

According to a second aspect, an embodiment of this application provides a device, including one or more processors and a memory, where the memory stores program instructions, and when the program instructions are executed by the device, the method in the foregoing aspects or any possible design of the aspects of the embodiments of this application is implemented.

According to a third aspect, an embodiment of this application provides a chip, where the chip is coupled to a memory in a device, so that the chip invokes, when running, program instructions stored in the memory, to implement the method in the foregoing aspects or any possible design of the aspects of the embodiments of this application.

According to a fourth aspect, an embodiment of this application provides a computer storage medium, where the computer storage medium stores program instructions, and when the program instructions are run on an electronic device, the device is enabled to perform the method in the foregoing aspects or any possible design of the aspects of the embodiments of this application.

According to a fifth aspect, an embodiment of this application provides a computer program product. When the computer program product is run on an electronic device, the electronic device is enabled to perform the method in the foregoing aspects or any possible design of the aspects of the embodiments of this application.

According to a sixth aspect, an embodiment of this application provides a content display system, where the system includes an electronic device, a first server, and a second server that perform the method in the first aspect or any possible design involved in the first aspect.

In addition, for technical effects brought by any design manner in the second aspect to the sixth aspect, refer to technical effects brought by different design manners inthe method part. Details are not described herein again.

### BRIEF DESCRIPTION OF DRAWINGS

FIG. 1 shows an electronic device according to an embodiment of this application;
FIG. 2A (1) and FIG. 2A (2) are schematic diagrams of a user interface according to an embodiment of this application;
FIG. 2B (1) and FIG. 2B (2) are schematic diagrams of a user interface according to an embodiment of this application;
FIG. 2C is a schematic diagram of a user interface according to an embodiment of this application;
FIG. 2D is a schematic diagram of a user interface according to an embodiment of this application;
FIG. 2E (1) and FIG. 2E (2) are schematic diagrams of a user interface according to an embodiment of this application;
FIG. 2F (1) and FIG. 2F (2) are schematic diagrams of a user interface according to an embodiment of this application;
FIG. 2G (1), FIG. 2G (2), and FIG. 2G (3) are schematic diagrams of a user interface according to an embodiment of this application;
FIG. 3 is a schematic diagram of a content display process according to an embodiment of this application;
FIG. 4 is a schematic diagram of a content display process according to an embodiment of this application;
FIG. 5 shows a device according to an embodiment of this application;
FIG. 6 is a schematic diagram of a content display system according to an embodiment of this application; and
FIG. 7 shows a device according to an embodiment of this application.

### DESCRIPTION OF EMBODIMENTS

It should be understood that "a plurality of" involved in embodiments of this application means two or more.

The term "and/or" in this specification describes only an association relationship for associated objects and represents that three relationships may exist. For example, A and/or B may represent the following three cases: Only A exists, both A and B exist, and only B exists. In addition, unless otherwise specified, the character "/" in this specification generally indicates an "or" relationship between the associated objects. In the descriptions of the embodiments of the present invention, words such as "first" and "second" are merely used for distinguishing purposes, and cannot be understood as an indication or implication of relative importance, and cannot be understood as an indication or implication of a sequence.

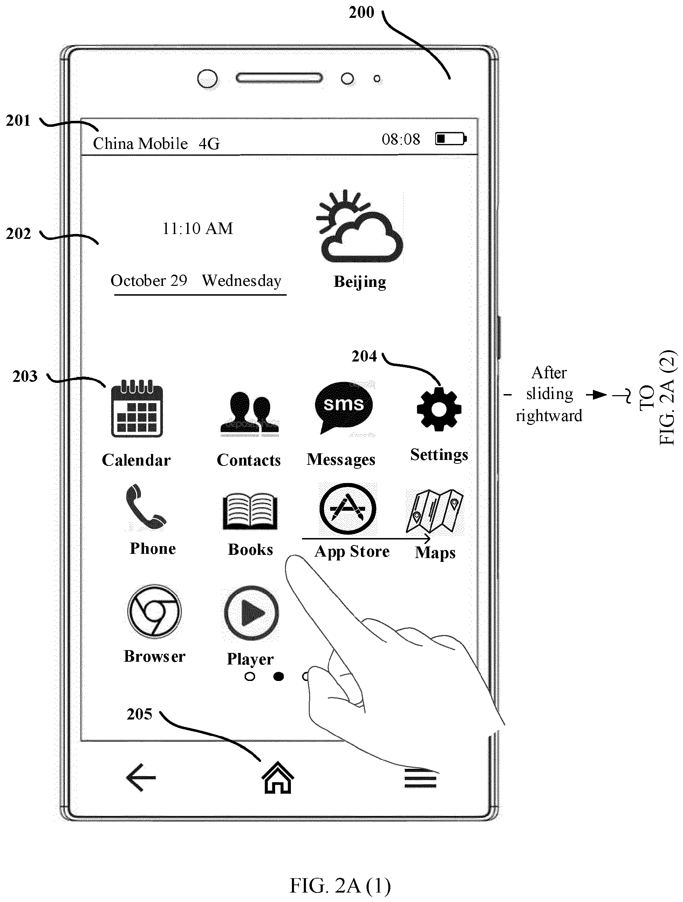

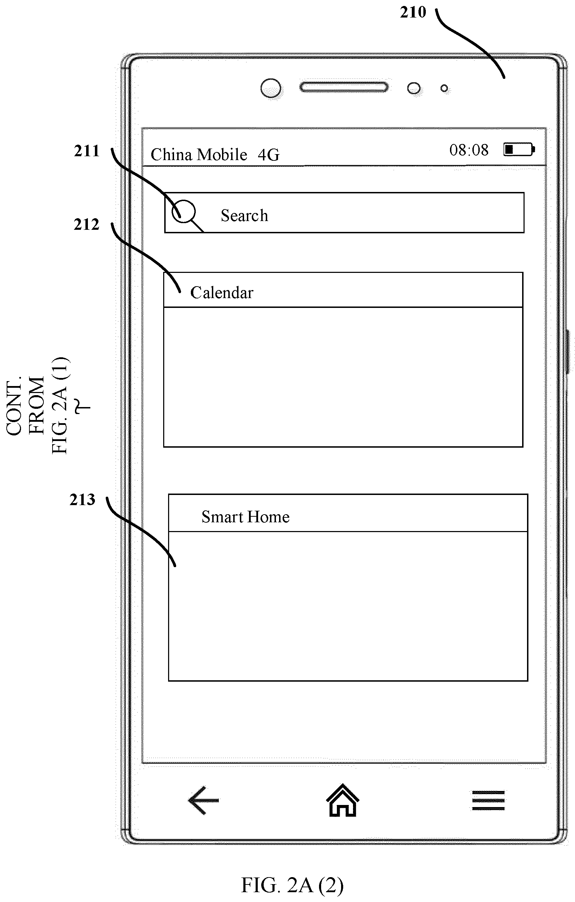

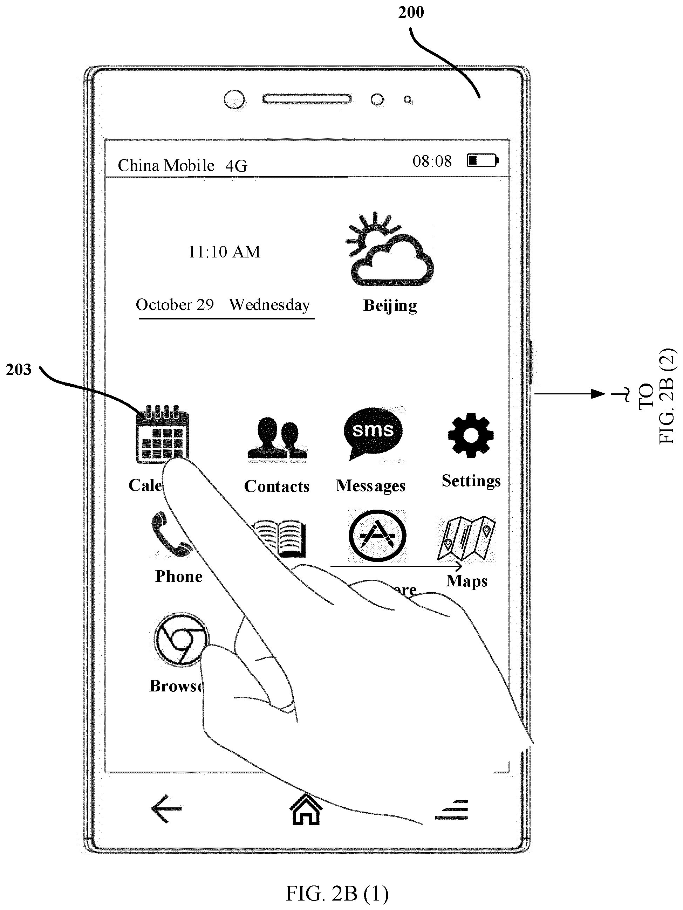

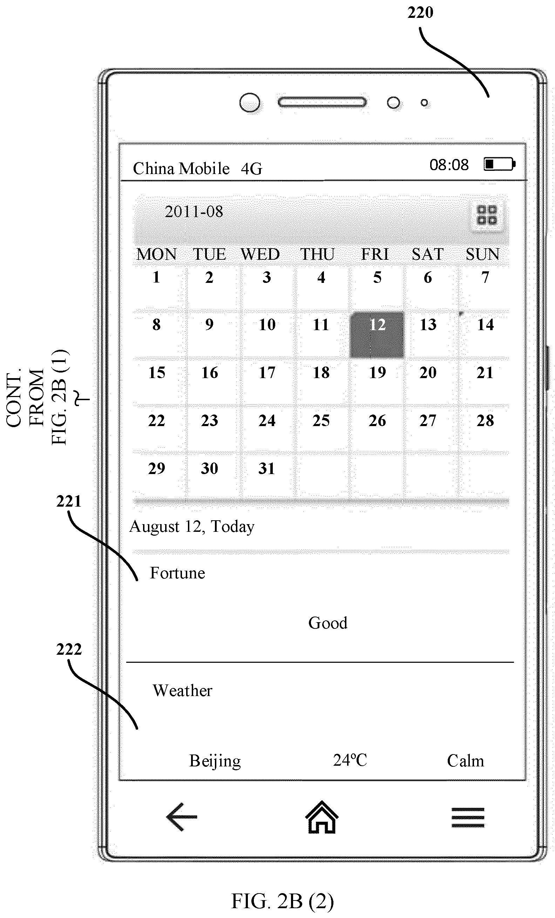

In the following, some terms of the embodiments of this application are described,to help a person skilled in the art have a better understanding.
(1) A widget may be referred to as a widget, and may also be referred to as a window gadget, a control element, or the like. In the embodiments of this application, the widget may be located on a HiBoard (HiBoard), a home screen, or a user interface of an APP. For example, the home screen may be a user interface 200 shown in FIG. 2A (1), and the user interface 200 includes a weather and time widget 202. For another example, the HiBoard may be a user interface 210 in FIG. 2A (2), and the user interface 210 includes a calendar widget 212, a smart homewidget 213, and the like. It may be understood that an electronic device may display the user interface 210 in response to an operation ofa user of sliding rightwardin the user interface 200. For another example, the APP is Calendar, a user interface of Calendar may be a user interface 220 in FIG. 2B (2), and the user interface 220 includes a weather widget 222. It may be understood that the electronic device may display the user interface 220 in response to an operation performed by the user on a Calendar icon in the user interface 200.

It should be noted that, in the embodiments of this application, the electronic device may set one or more widgets in a specific user interface in response to a specific operation of the user. For example, in the embodiments of this application, a clock widget may be set on the home screen, so that the electronic device can display current time when displaying the home screen. For another example, in the embodiments of this application, a weather widget may be set on the HiBoard, so that the electronic device can display weather forecast of a specific region when displaying the HiBoard. For still another example, in the embodiments of this application, a CPU widget may be disposed in a user interface of a specific application, so that the electronic device can display a CPU usage ratio when displaying the user interface of the application. In addition, the widget in the embodiments of this application may alternatively be a search widget, a stock widget, a ball game widget, or the like.

In the embodiments of this application, the widget may display content in a form of a card, or may display corresponding content in another form. This is not limited herein.

(2) A host APP is an APP on which a widget can be loaded and run. For example, when the widget is located in a user interface of a first APP, a host APP of the widget is the first APP. For example, if the user interface of Calendar in FIG. 2B (2) includes the weather widget 222, a host APP of the weather widget 222 is Calendar. For another example, when the widget is located on the HiBoard, the host APP of the widget is an APP to which the HiBoard belongs. The APP to which the HiBoard belongs may be referred to as a HiBoard APP for short. For example, the HiBoard is the user interface 210 shown in FIG. 2A (2). Specifically, the user interface 210 includes the calendar widget 212 and the smart home widget 213, and both a host APP of the calendar widget 212 and a host APP of the smart home widget 213 are the HiBoard APP. For another example, when the widget is located on the home screen, the host APP of the widget is an APP to which the home screen belongs. For example, the APP to which the home screen belongs may be a desktop APP. For example, the home screen is the user interface 200 shown in FIG. 2A (1), and the user interface 200 includes the weather and time widget 202. In this case, a host APP of the weather and time widget 202 is the desktop APP.

It should be noted that content of the widget and content of the host APP in the embodiments of this application may be provided by a same content provider (content provider, CP), or may be provided by different content providers. For example, when the widget and the host APP are developed by a same manufacturer, the content of the widget and the content of the host APP are provided by a same content provider. For another example, when the widget and the host APP are developed by different manufacturers, the content of the widget and the content of the host APP are provided by different content providers.
(3) A native APP may include content of a corresponding widget. For example, a native APP of a WeChat widget is WeChat. For another example, a native APP of an Alipay widget is Alipay. For another example, a native APP of a weather widget is Weather. It should be noted that for a widget, a native APP of the widget and a host APP of the widget may be the same or different, and this is not limited. For example, a host APP of the Alipay widget may be the HiBoard APP, and the native APP of the Alipay widget is Alipay. For another example, the host APP of the weather widget is the desktop APP, and a native APP of the weather widget is Weather. For still another example, both the host APP and a native APP of the calendar widget are Calendar.
(4) An identity authentication token may also be referred to as an "identity authentication token" or an "identity authentication token", and is used to identify validity of the electronic device. For example, the identity authentication token may be used to determine whether the electronic device has a resource access permission and/or a resource use permission, to prevent an attacker from pretending to be an authorized user to obtain the resource access permission, and ensure system and data security.

An electronic device, a graphical user interface (graphical user interface, GUI) used in such an electronic device, and embodiments for using such an electronic device are described below. For ease of description below, the GUI is referred to as a user interface for short.

The embodiments of this application may be applied to an electronic device that supports a widget function. The electronic device in the embodiments of this application may also be referred to as a terminal, a terminal device, user equipment, or the like. For example, the electronic device in the embodiments of this application may be a portable electronic device, such as a mobile phone, a tablet computer, a wearable device (such as a smartwatch) having a wireless communication function, or a vehicle-mounted device. An example embodiment of the portable electronic device includes but is not limited to a portable electronic device using iOS^{®}, Android^{®}, Microsoft^{®}, or another operating system.

It should be understood that, in the embodiments of this application, the electronic device usually provides various functions for the user by using an application (for example, an APP) installed on the electronic device. For example, the application may be a system application, or may be a third-party application. Examples include applications such as Drawing, Presentation, Word Processing, Games, Phone, Video Player, Music Player, Emails, Instant Messaging, Photo Management, Camera, Browser, Calendar, Clock, Payment, App Store, Desktop, HiBoard, and Health Management. For example, a plurality of applications may be simultaneously run on an electronic device 100 in the embodiments of this application.

It should be noted that, in the embodiments of this application, the host APP is an application installed on the electronic device. For example, the host APP may be a system application installed on the electronic device, or may be a third-party application installed on the electronic device. This is not limited. It should be further noted that, in the embodiments of this application, when the electronic device displays a widget on a host APP, a native APP of the widget may be installed on the electronic device, or may not be installed on the electronic device. This is not limited.

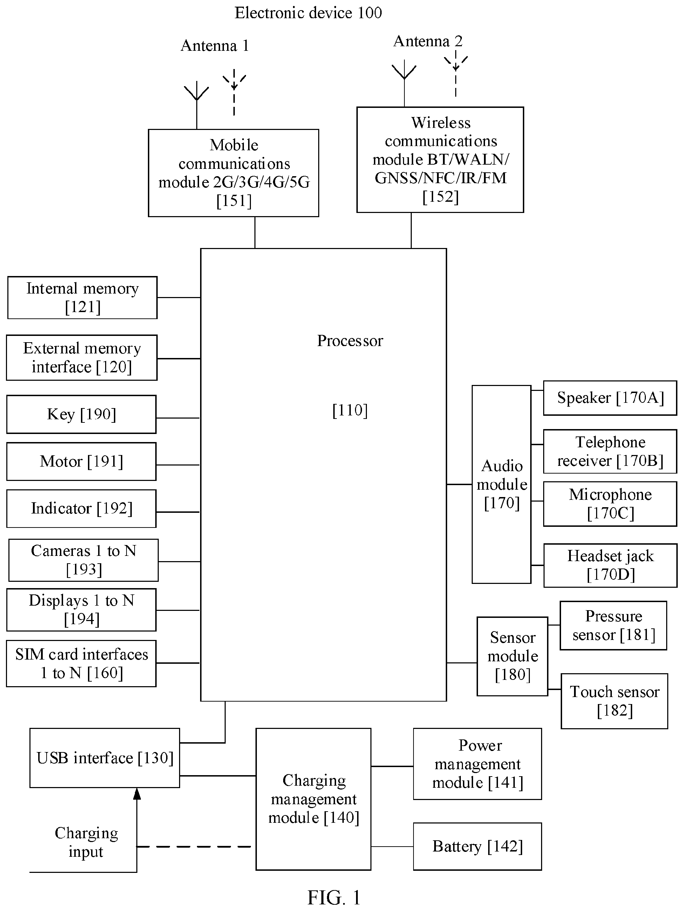

For example, FIG. 1 is a schematic diagram of a hardware structure of an electronic device according to an embodiment of this application. Specifically, as shown in FIG. 1, an electronic device 100 may include a processor 110, an external memory interface 120, an internal memory 121, a USB interface 130, a charging management module 140, a power management module 141, a battery 142, an antenna 1, an antenna 2, a mobile communications module 151, a wireless communications module 152, an audio module 170, a speaker 170A, a telephone receiver 170B, a microphone 170C, a headset jack 170D, a sensor module 180, a key 190, a motor 191, an indicator 192, a camera 193, a display 194, and a SIM card interface 160. The sensor module 180 may include a pressure sensor 181 and a touch sensor 182. In other embodiments, the sensor module 180 further includes one or more of a gyro sensor, a pressure sensor, a magnetic sensor, an acceleration sensor, a distance sensor, an optical proximity sensor, a fingerprint sensor, a temperature sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network Processing Unit, NPU). Different processing units may be independent components, or may be integrated into one or more processors.

A memory may be further disposed in the processor 110, and is configured to store instructions and data. In some embodiments, the memory in the processor 110 is a cache. The memory may store an instruction or data that has been recently used or cyclically used by the processor 110. If the processor 110 needs to use the instruction or the data again, the processor 110 may directly invoke the instruction or the data from the memory. Repeated access is avoided, and waiting time of the processor 110 is reduced, and therefore system efficiency is improved.

The display 194 is configured to display an image, a video, and the like. The display 194 includes a display panel. The display panel may be a liquid crystal display (liquid crystal display, LCD), an organic light-emitting diode (organic light-emitting diode, OLED), an active matrix organic light-emitting diode (active-matrix organic light emitting diode, AMOLED), a flexible light-emitting diode (flex light-emitting diode, FLED), a mini LED, a micro LED, a micro-oLED, a quantum dot light-emitting diode (quantum dot light-emitting diode, QLED), or the like. In some embodiments, the electronic device 100 may include one or N displays 194, where N is a positive integer greater than 1.

In this embodiment of this application, the display 194 may be an integrated flexible display, or may be a spliced display including two rigid screens and one flexible screen located between the two rigid screens.

The camera 193 (a front-facing camera or a rear-facing camera, or a camera can be used as both a front-facing camera and a rear-facing camera) is configured to capture a static image or a video. Generally, the camera 193 may include a photosensitive element such as a lens group and an image sensor. The lens group includes a plurality of lenses (a convex lens or a concave lens), and is configured to collect an optical signal reflected by an object to be photographed, and transmit the collected optical signal to the image sensor. The image sensor generates, based on the optical signal, an original image of the object to be photographed.

The internal memory 121 may include a program storage area and a data storage area. The program storage area may store program instructions such as an operating system and an application (such as Camera or WeChat). The data storage area may store data (for example, an image, a video, content in a user interface of an APP, and content in a widget) created during the use of the electronic device 100. For example, the internal memory 121 may be configured to store related information of the widget, related information of a host APP, and the like. It should be noted that, in this application, memory space that is in the internal memory 121 and that is used to store the related information of the host APP may be referred to as memory space corresponding to the host APP, memory space of the host APP, storage space of the host APP, or the like for short, and memory space that is in the internal memory 121 and that is used to store the related information of the widget may be referred to as memory space corresponding to the widget, memory space of the widget, storage space of the widget, or the like for short. The processor 110 performs various functional applications and data processing of the electronic device 100 by running the program instructions stored in the internal memory 121. For example, the processor 110 may perform a display method in the embodiments of this application by running the program instructions in the internal memory 121. In addition, the internal memory 121 may include a high-speed random access memory, and may further include a non-volatile memory such as at least one magnetic disk storage component, a flash memory component, or a universal flash storage (universal flash storage, UFS).

Certainly, code of an algorithm provided in the embodiments of this application may be further stored in an external memory. The external memory interface 120 may be configured to connect to an external storage card (for example, a micro SD card), to extend a storage capability of the electronic device 100. In this case, the processor 110 may run, by using the external memory interface 120, the code that is of the algorithm and that is stored in the external memory, to perform various functional applications and data processing of the electronic device 100.

The pressure sensor 181 included in the sensor module 180 is configured to perceive a pressure signal, and may convert the pressure signal into an electrical signal. In some embodiments, the pressure sensor 181 may be disposed on the display 194. There are many types of pressure sensors 181, such as a resistive pressure sensor, an inductive pressure sensor, and a capacitive pressure sensor.

The touch sensor 182 included in the sensor module 180 is also referred to as a "touch panel". The touch sensor 182 may be disposed on the display 194, and the touch sensor 182 and the display 194 form a touchscreen that is also referred to as a "touchscreen". The touch sensor 182 is configured to detect a touch operation performed on or near the touch sensor 182. The touch sensor 182 may transfer the detected touch operation to the application processor, to determine a type of a touch event. Visual output related to the touch operation may be provided by using the display 194. In some other embodiments, the touch sensor 182 may alternatively be disposed on a surface of the electronic device 100, and a position of the touch sensor 182 is different from a position of the display 194.

A wireless communication function of the electronic device 100 may be implemented by using the antenna 1, the antenna 2, the mobile communications module 151, the wireless communications module 152, the modem processor, the baseband processor, and the like.

The antenna 1 and the antenna 2 are configured to transmit and receive an electromagnetic wave signal. Each antenna in the electronic device 100 may be configured to cover a single communications frequency band or a plurality of communications frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communications module 151 may provide a solution for wireless communication including 2G/3G/4G/5G and the like applied to the electronic device 100. The mobile communications module 151 may include at least one filter, a switch, a power amplifier, a low noise amplifier (low noise amplifier, LNA), and the like. The mobile communications module 151 may receive an electromagnetic wave via the antenna 1, perform processing such as filtering and amplification on the received electromagnetic wave, and transmit the electromagnetic wave to the modem processor for demodulation. The mobile communications module 151 may further amplify a signal modulated by the modem processor, convert the signal into an electromagnetic wave via the antenna 1, and radiate the electromagnetic wave. In some embodiments, at least some function modules of the mobile communications module 151 may be disposed in the processor 110. In some embodiments, at least some function modules of the mobile communications module 151 and at least some modules of the processor 110 may be disposed in a same component.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the telephone receiver 170B, and the like), or displays an image or a video by using the display 194. In some embodiments, the modem processor may be an independent component. In some other embodiments, the modem processor may be independent of the processor 110, and is disposed in a same component with the mobile communications module 151 or another function module.

The wireless communications module 152 may provide a solution for wireless communication including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR), and the like applied to the electronic device 100. The wireless communications module 152 may be one or more components integrated with at least one communication processing module. The wireless communications module 152 receives an electromagnetic wave via the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, convert the signal into an electromagnetic wave via the antenna 2, and radiate the electromagnetic wave.

In addition, the electronic device 100 may implement an audio function such as music playing or recording by using the audio module 170, the speaker 170A, the telephone receiver 170B, the microphone 170C, the headset jack 170D, the application processor, and the like.

The key 190 may include a power key, a volume key, and the like. The key 190 may be a mechanical key, or may be a touch key. The electronic device 100 may receive input of the key 190, and generate key signal input related to user setting and function control of the electronic device 100. The electronic device 100 may generate a vibration prompt (such as an incoming call vibration prompt) by using the motor 191. The indicator 192 in the electronic device 100 may be an indicator light, and may be configured to indicate a charging status and a battery level change, or may be configured to indicate a message, a missed call, a notification, or the like. The SIM card interface 160 in the electronic device 100 is configured to connect to a SIM card. The SIM card may be inserted into the SIM card interface 160 or plugged from the SIM card interface 160 to come into contact with or be separated from the electronic device 100.

The electronic device 100 may implement a display function by using the GPU, the display 194, the application processor, and the like. The GPU is a microprocessor for image processing, and is connected to the display 194 and the application processor. The GPU is configured to perform mathematical and geometric calculation, and is used for graphics rendering. The processor 110 may include one or more GPUs that execute program instructions to generate or change display information.

In some other embodiments, the processor 110 may further include one or more interfaces. For example, the interface may be the SIM card interface 160. For another example, the interface may be the USB interface 130. For still another example, the interface may alternatively be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and/or the like. It may be understood that, in this embodiment of this application, the processor 110 may be connected to different modules of the electronic device 100 by using the interface, so that the electronic device 100 can implement different functions such as photographing and processing. It should be noted that a connection manner of the interface in the electronic device 100 is not limited in this embodiment of this application.

The SIM card interface 160 may be configured to connect to a SIM card. The SIM card may be inserted into the SIM card interface 160 or plugged from the SIM card interface 160 to come into contact with or be separated from the electronic device 100. The electronic device 100 may support one or N SIM card interfaces, where N is a positive integer greater than 1. The SIM card interface 160 may support a nano-SIM card, a micro SIM card, a SIM card, and the like. A plurality of cards may be simultaneously inserted into a same SIM card interface 160. The plurality of cards may be of a same type, or may be of different types. The SIM card interface 160 may also be compatible with different types of SIM cards. The SIM card interface 160 may also be compatible with an external storage card. The electronic device 100 interacts with a network by using the SIM card, to implement a call function, a data communication function, and the like. In some embodiments, the electronic device 100 may further use an eSIM, namely, an embedded SIM card. The eSIM card may be embedded in the electronic device 100 and cannot be separated from the electronic device 100.For example, when only one SIM card can be inserted into the SIM card interface 160, the electronic device 100 may access a cellular network by using the SIM card inserted into the SIM card interface 160. For another example, when two SIM cards can be inserted into the SIM card interface 160, the electronic device 100 may access one cellular network by using each of the two SIM cards inserted into the SIM card interface 160.

The USB interface 130 is an interface that complies with a USB standard specification. For example, the USB interface 130 may be a mini USB interface, a micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play audio by using the headset.

The charging management module 140 is configured to receive charging input from the charger. The charger may be a wireless charger, or may be a wired charger.In some embodiments of wired charging, the charging management module 140 may receive charging input from the wired charger through the USB interface 130. In some embodiments of wireless charging, the charging management module 140 may receive wireless charging input by using a wireless charging coil of the electronic device 100. When charging the battery 142, the charging management module 140 may further supply power to the electronic device 100 by using the power management module 141.

The power management module 141 is configured to connect the battery 142 and the charging management module 140 to the processor 110. The power management module 141 receives input of the battery 142 and/or the charging management module 140, and supplies power to the processor 110, the internal memory 121, the external memory, the display 194, the camera 193, the mobile communications module 151, the wireless communications module 152, and the like. The power management module 141 may be further configured to monitor parameters such as a battery capacity, a battery cycle quantity, and a battery health status (electric leakage and impedance). In some other embodiments, the power management module 141 may alternatively be disposed in the processor 110. In some other embodiments, the power management module 141 and the charging management module 140 may alternatively be disposed in a same component.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

In some embodiments of this application, the electronic device 100 shown in FIG. 1 may be a portable electronic device that further includes another function such as a personal digital assistant function and/or a music player function, such as a mobile phone, a tablet computer, or a wearable device (such as a smart watch) that has a wireless communication function. An example embodiment of the portable electronic device includes but is not limited to a portable electronic device using iOS^{®}, Android^{®}, Microsoft^{®}, or another operating system. The portable electronic device described above may alternatively be another portable electronic device, such as a laptop (laptop) computer having a touch-sensitive surface (for example, a touch panel). It should be further understood that, in some other embodiments of this application, the electronic device 100 may not be a portable electronic device, but is a desktop computer having a touch-sensitive surface (for example, a touch panel).

For example, FIG. 2A (1) and FIG. 2A (2)are schematic diagrams of a user interface according to an embodiment of this application. The electronic device 100 displays the user interface by using the display 194. Specifically, the user interface may be a home screen, a HiBoard, a user interface of an application, or the like. For example, the home screen may be a user interface 200 shown in FIG. 2A (1). As shown in the figure, the user interface 200 may include a status bar 201, a time and weather widget 202, and icons of a plurality of applications, such as a Calendar icon 203 and a Settings icon 204. The status bar 201 may include an operator name (China Mobile), a mobile network (for example, 4G), time, and a battery remaining capacity. In some other embodiments of this application, the status bar 201 may include one or more of signal strength of the mobile network, a Bluetooth icon, a Wi-Fi icon, a screen lock icon, an external device icon, and the like.

It may be further understood that, in some other embodiments, the user interface 200 may further include a dock bar. The dock bar may include icons of commonly used applications, for example, a Phone icon, a Short Message icon, an Email icon, and a Weather icon. It should be understood that a user may set the icons of the commonly used applications in the dock bar according to a requirement of the user.

In some other embodiments, as shown in FIG. 2A (1), the electronic device 100 may further include a home screen button 205. The home screen button 205 may be a physical button, or may be a virtual button. The home screen button 205 is configured to return, based on an operation of the user, to the home screen from a user interface such as the HiBoard or a user interface of an application displayed on the display 194. In this way, it can be convenient for the user to view the home screen at any time and perform an operation on a control (such as an icon) on the home screen.

FIG. 2A (1) and FIG. 2A (2) are used as an example. The user slides rightward in the user interface 200, and the electronic device 100 jumps to the HiBoard in response to an operation of the user of sliding rightward in the user interface 200, in other words, displays the HiBoard on the display 194. For example, the HiBoard may be a user interface 210 shown in FIG. 2A (2). The user interface 210 includes a search box 211, and may further include one or more widgets, for example, a calendar widget 212 and a smart home widget 213.

As shown in FIG. 2B (1) and FIG. 2B (2), when displaying the user interface 200, the display 194 of the electronic device 100 may respond to a touch operation performed by the user on the Calendar icon 203, display a user interface 220 of Calendar on the display 194, and display a specific date such as a specific year, month, and day in the user interface 220 of Calendar. The user interface 220 may further include a fortune widget 221, and the fortune widget 221 may display a fortune status of a current day (August 12, 2011), such as "good". The user interface 220 may further include a weather widget 222, and the widget 222 may display weather conditions for the current day (August 12, 2011).

As described above, the widget may be displayed on the HiBoard, or may be displayed in a user interface of an application. The widget directly displays, to the user, a service or content that the user cares about most. A content display manner of the widget is described below.

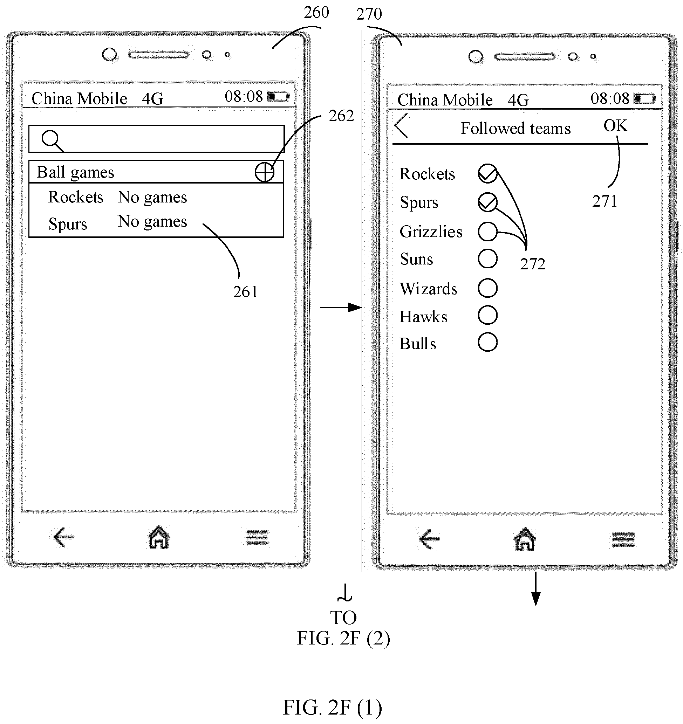

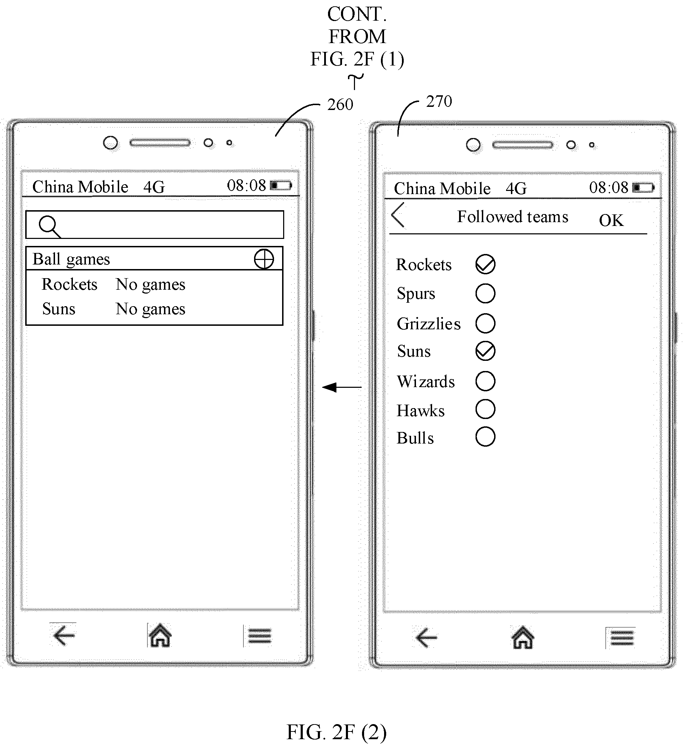

The user may configure, in a user interface of a host APP of the widget, content to be displayed in the widget. The electronic device 100 saves, to memory space of the widget by using the host APP, configuration information of the content that is configured by the user and that is to be displayed in the widget. After the widget is loaded, the electronic device may obtain content of the corresponding widget from a CP server based on the configuration information stored in the memory space of the widget, and display, on the display 194, the content of the widget that is obtained from the CP server. For example, content of a followed team is displayed in the widget for description. As shown in FIG. 2F (1) and FIG. 2F (2), the electronic device 100 displays a user interface 260 on the display 194. The user interface 260 includes a widget 261 and a virtual button 262, and the widget 261 displays ball game information indicating that team names areRockets andSpurs. For example, the electronic device 100 may display a user interface 270 on the display 194 in response to an operation performed by the user on the virtual button 262. The user interface 270 includes options for a plurality of team names such as Rockets, Spurs, Grizzlies, Suns, and Wizards, and the user may select a team via the virtual button 272. In some other embodiments, the user interface 270 may further include a virtual button 271, and the user may perform an operation on the virtual button 271 after selecting an option for one or more team names in the user interface 270, so that the electronic device 100 may display, in the widget 261 in response to the operation on the virtual button 271, a ball game situation of the corresponding team name selected by the user. For example, after selecting an option for one or more team names in the user interface 270, the user may perform an operation on the virtual button 271, so that the electronic device 100 may save, in response to the operation on the virtual button 271, the corresponding team name selected by the user to a corresponding memory (for example, the internal memory 121, the external memory, or a dedicated memory), and display the user interface 260 on the display 194 based on the corresponding team name stored in the memory and selected by the user. The user interface 260 includes a widget 261, and the widget 261 displays a ball game situation of the corresponding team name selected by the user. For example, when the user selects options corresponding to team names Houston Rockets and Phoenix Suns, the user performs an operation on the virtual button 271, and the electronic device 100 displays the user interface 260 on the display 194 in response to the operation performed on the virtual button 271 by the user. The user interface 260 includes a widget 261, and the widget 261 displays ball game information of teams corresponding to team namesRockets andSuns.

Because ball game information of teams is public content, the widget 261 in the electronic device 100 may obtain, from the CP server configured to provide content of the widget 261 and based on the team name selected by the user, ball game information corresponding to the team name selected by the user, and display, by using the widget 261, the ball game information corresponding to the team name selected by the user.

However, when content displayed in the widget is non-public content information (for example, a status of a device in the smart home), the widget in the electronic device 100 may send an identity authentication token to the CP server configured to provide the content displayed in the widget; after identity authentication performed on the electronic device 100 based on the identity authentication token succeeds, the CP server sends, to the electronic device 100, corresponding content that needs to be displayed in the widget; and after obtaining the corresponding content that needs to be displayed in the widget, the electronic device 100 displays the corresponding content. This manner of obtaining the corresponding content by using the identity authentication token helps improve security.

In some embodiments, when the content of the widget and content of the host APP of the widget are provided by a same CP server, the electronic device 100 may obtain the identity authentication token in the following manner:

The electronic device 100 may obtain the identity authentication token from the CP server, and the identity authentication token is allocated by the CP server, in a process in which a user account of the CP server is registered with or logged in to on the host APP, to the electronic device 100 based on the user account registered with or logged in on the host APP. The electronic device 100 saves the identity authentication token to memory space of the host APP, and may further save the identity authentication token to memory space of the widget. When the widget in the electronic device 100 obtains corresponding content from the CP server, the identity authentication token may be obtained from the memory space of the widget or the memory space of the host APP of the widget. For example, the HiBoard includes a widget 1, a host APP of the widget 1 is a HiBoard APP, and a user account of the HiBoard APP is a device account, and corresponding registration may be performed in a system settings interface. The identity authentication token may be allocated by the CP server to the electronic device 100 based on the device account. When the widget 1 needs to obtain corresponding content, the identity authentication token may be obtained from memory space corresponding to the HiBoard.

However, in some embodiments, the content of the widget and the content of the host APP of the widget are separately provided by different CP servers. In this case, for security consideration, the electronic device 100 does not save, to the storage space of the widget, the identity authentication token obtained based on the user account of the host APP. In addition, the widget is not allowed to use the identity authentication token obtained based on the user account of the host APP. Therefore, the widget cannot obtain the non-public content information based on the identity authentication token. In view of this, an embodiment of this application provides a display method, so that an account of a native APP of a widget and an account of a host APP can be bound, and the widget in the electronic device 100 can obtain an identity authentication token used to access a CP server that provides content of the widget. In this way, security and diversity of a manner of obtaining the content of the widget are improved.

The method and the electronic device are based on a same inventive concept. Because the method and the electronic device have similar problem resolving principles, for an embodiment of the electronic device and an embodiment of the method, refer to each other. Repeated parts are not described.

With reference to the foregoing embodiments and the accompanying drawings, an embodiment of this application provides a content display method. The method may be implemented in an electronic device 100 with the hardware structure shown in FIG. 1. It should be noted that, for ease of description, a CP server configured to provide content of a host APP is referred to as a first server, and a CP server configured to provide content of a widget is referred to as a second server. If the host APP and the widget belong to different manufacturers, for ease of description, any user account registered with the first server of the host APP may be referred to as a first user account, an identity authentication token corresponding to the first user account is referred to as a first identity authentication token, any user account registered by a native APP of the widget with the second server is referred to as a second user account, and an identity authentication token corresponding to the second user account is referred to as a second identity authentication token. A user may log in to the native APP or a web page of the second server, and access the second server by using the second user account to perform personalized configuration. The second server stores personalized configuration information for the second user account. Because the widget does not have an independent login capability, to display content of the personalized configuration information in the widget, the widget in the electronic device 110 may access the second server based on the second identity authentication token of the second user account, and obtain and display the content corresponding to the personalized configuration information of the second user account, to improve user experience.

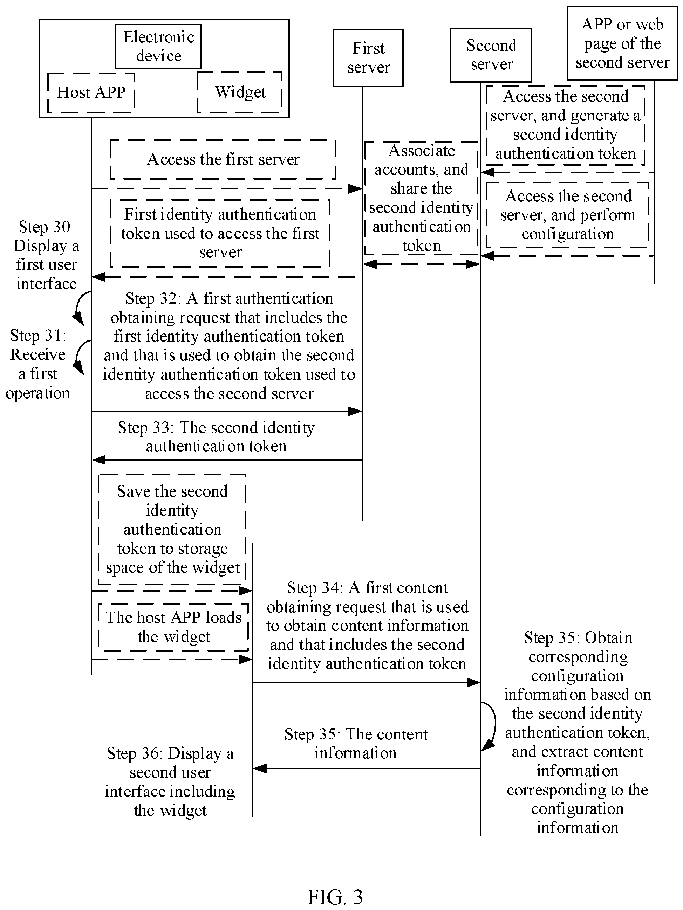

For example, FIG. 3 is a schematic flowchart of a content display method according to an embodiment of this application. Specifically, the method includes the following steps.

Step 30: An electronic device 100 displays a first user interface on a display 194.

It should be noted that the first user interface may be a homescreen,a HiBoard, ora user interface of an application. This is not limited.

Step 31: The electronic device 100 receives a first operation of a user, where the first operation is used to control the electronic device 100 to display a second user interface on the display 194, and the second user interface includes a widget.

For example, the first operation may be an operation performed by a user on an icon of an application, a sliding operation, a voice instruction, or a shortcut gesture operation. This is not limited.

For example, when the HiBoard includes a widget, the first operation may be an operation of the user of sliding rightward on the home screen. For example, the HiBoard is a user interface 210 shown in FIG. 2A (2), and includes a calendar widget 212 and a smart home widget 213, and the first operation may be an operation of the user of sliding rightward in a user interface 200. For another example, when a user interface of an application includes a widget, the first operation may be an operation performed by the user on an icon of the application. For example, a user interface of Calendar is a user interface 220 shown in FIG. 2B (2), and includes a fortune widget 221 and a weather widget, and the first operation may be a touch operation performed by the user on a Calendar icon 203 in the user interface 200.

For example, the first operation is an operation performed by the user on an icon of an application, or a touch operation such as a sliding operation performed on the home screen. A touch sensor 182 of the electronic device 100 detects a touch operation performed by the user on the display 194, and reports touch position information of the user on the display 194 to a processor 110. The processor 110 determines, based on the touch position information reported by the touch sensor 182, that the touch sensor 182 receives the first operation.

Step 32: The electronic device 100 sends a first authentication obtaining request to a first server in response to the first operation, where the first authentication obtaining request includes at least one of a first user account and a first identity authentication token, and the first authentication obtaining request may be used to obtain a second identity authentication token used by a to-be-displayed widget to access a second server.

The first identity authentication token is used by the first server to perform identity authentication on the electronic device, and is allocated by the first server to the electronic device 100 based on a first user account of a host APP of the widget.

For example, the user may register with the first server on the host APP or a web page of the first server by using the first user account, and subsequently, the electronic device may log in to the first server by using the registered first user account, and obtain a resource of the first server after logging in to the first server. For example, the electronic device 100 sends the first authentication obtaining request to the first server, and the first authentication obtaining request includes the first user account. The user account includes a user name and a password. Each successfully registered user account is stored on the first server, and the first server may perform identity authentication on the electronic device based on each prestored user account, and send a corresponding resource to the electronic device 100 after the identity authentication succeeds.

For security considerations, the first server may generate, based on the first user account, the first identity authentication token corresponding to the first user account, and send the generated first identity authentication token corresponding to the first user account to the electronic device 100. It may be agreed that, that the first server performs identity authentication on the electronic device 100 based on the first identity authentication token means that when the electronic device 100 obtains the resource of the first server by using the first user account, the electronic device 100 may obtain the resource by using the first identity authentication token corresponding to the first user account. For example, the electronic device 100 sends the first authentication obtaining request to the first server, the first authentication obtaining request includes the first identity authentication token corresponding to the first user account, and the first server stores a first identity authentication token corresponding to each user account; and after receiving the first authentication obtaining request, the first server may determine whether the first server stores the first identity authentication token, and if the first server stores the first identity authentication token, determines that the identity authentication on the electronic device 100 succeeds, or if the first server does not store the first identity authentication token, determines that the identity authentication on the electronic device 100 fails.

In some embodiments, it may be agreed thatthe first server performs identity authentication on the electronic device 100 based on the first user account and the first identity authentication token, and the first authentication obtaining request may include the first user account and the first identity authentication token corresponding to the first user account. Correspondingly, the first server determines, based on each user account and an identity authentication token corresponding to each user account that are prestored, whether the first server stores the first user account and the first identity authentication token corresponding to the first user account. If the first server stores the first user account and the first identity authentication token corresponding to the first user account, the first server determines that the identity authentication on the electronic device 100 succeeds, and the first server may send the corresponding resource to the electronic device 100.

For security considerations, to avoid a case in which another person steals a user account and then obtains a resource of the first server, when registering with or logging in to the first server by using the first user account, the electronic device 100 may further send an identifier of the electronic device 100 to the first server. Correspondingly, the first server may further store the identifier of the electronic device corresponding to the first user account. In some embodiments, it may be agreed that the first server further performs identity authentication on the electronic device based on the identifier of the electronic device. For example, it is agreed that identity authentication is performed on the electronic device based on the first user account, the first identity authentication token corresponding to the first user account, and the identifier of the electronic device. The electronic device 100 sends the first authentication obtaining request to the first server, and the first authentication obtaining request includes the first user account, the first identity authentication token corresponding to the first user account, and the identifier of the electronic device 100. The first server determines whether the first server stores the first user account, the first identity authentication token corresponding to the first user account, and the identifier of the electronic device corresponding to the first user account, and if the first server stores the first user account, the first identity authentication token corresponding to the first user account, and the identifier of the electronic device corresponding to the first user account, the identity authentication on the electronic device 100 succeeds. If authentication on the first user account and the first identity authentication token succeeds, but authentication on the identifier of the electronic device fails, the first server may send, to the electronic device 100, prompt information indicating whether the first user account is stolen. Then, the electronic device 100 performs authentication on a user identity in another manner.

The first identity authentication token may be allocated by the first server to the first user account when the first user account is registered with the first server. After the first user account is registered, the user sometimes forgets to use the first user account. Therefore, for the first server, it is meaningless to allocate the first identity authentication token to the first user account. Based on this, the first identity authentication token may alternatively be allocated by the first server to the first user account when the first user account is logged in to the first server for the first time.

For example, the electronic device displays a third user interface, where the third user interface includes a user account input area; the electronic device sends a first request to the first server in response to an operation indicating that the user finishes entering the first user account into the user account input area, where the first request is used by the electronic device to log in to or register with the first server, and the first request includes the first user account; and the electronic device receives a response that is to the first request and that is sent by the first server, where the response to the first request includes the first identity authentication token, and the first identity authentication token is allocated by the first server to the electronic device based on the first user account.

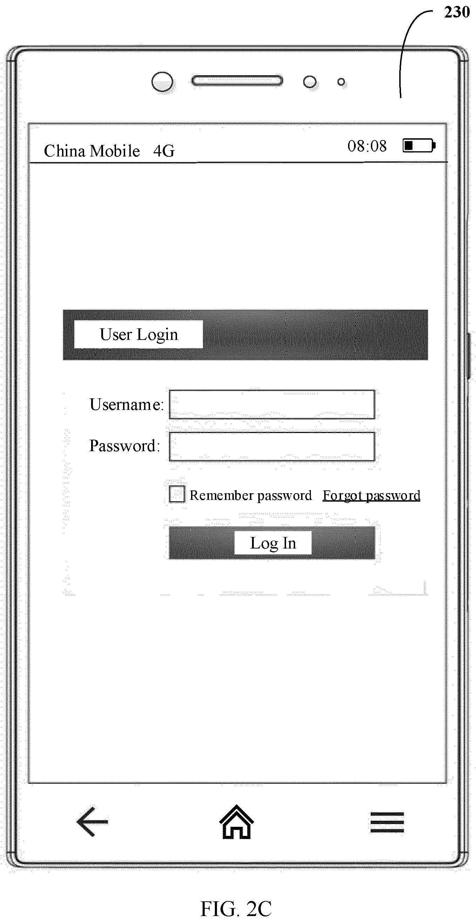

As shown in FIG. 2C, the user logs in, on the electronic device 100, to a third user interface 230 of the first server by using the first user account. The user may enter the first user account, that is, a user name and a password, in the third user interface 230, and then tap a "Log In" button. The electronic device 100 sends a login request to the first server in response to an operation of tapping the "Log In" button. Generally, the login request includes the user account used for login. If current login is login for the first time, the first identity authentication token corresponding to the first user account is sent to the electronic device 100. For example, the first server may determine, based on whether the first server stores the first identity authentication token corresponding to the first user account, whether the current login is login for the first time, and if it is determined that the first server does not store the first identity authentication token corresponding to the first user account, the first server may determine that the current login is login for the first time, generate the first identity authentication token corresponding to the first user account, and send the first identity authentication token corresponding to the first user account to the electronic device 100. The first server may alternatively store the first user account and the first identity authentication token corresponding to the first user account. If the current login is not login for the first time, the login request generally includes the first user account and the first identity authentication token corresponding to the first user account.

If the host APP is a HiBoard APP or a desktop APP, the user may perform registration or login in a system settings interface of the electronic device 100. After the electronic device 100 receives the first user account and the first identity authentication token corresponding to the first user account that are sent by the first server, the electronic device 100 may share the first user account and the first identity authentication token corresponding to the first user account with the host APP. For example, the first user account and the identity authentication token corresponding to the first user account are saved to storage space of the host APP, and the host APP obtains the first user account and the first identity authentication token corresponding to the first user account.

If the host APP is a third-party APP, the user may perform registration or login in a user interface of the third-party APP, the third-party APP of the electronic device 100 receives the first user account and the first identity authentication token corresponding to the first user account that are sent by the first server, and the third-party APP saves the first user account and the first identity authentication token corresponding to the first user account to storage space of the third-party APP.

A process in which another APP obtains an identity authentication token is the same as the foregoing process in which the host APP obtains the first identity authentication token.

When the electronic device 100 sends the first authentication obtaining request to the first server, for example, the processor 110 of the electronic device 100 may send, in response to the first operation, the first authentication obtaining request to the first server by using a mobile communications module 151 and/or a wireless communications module 152. For example, the processor 110 of the electronic device 100 invokes the host APP in response to the first operation, and sends the first authentication obtaining request to the first server by using the mobile communications module 151 and/or the wireless communications module 152.

Step 33: After receiving the first authentication obtaining request, the first server obtains a second identity authentication token based on at least one of the first user account and the first identity authentication token, and sends a response to the first authentication obtaining request to the electronic device 100, where the response to the first authentication obtaining request includes the second identity authentication token, the second identity authentication token is used by the second server to perform identity authentication on the electronic device, and the second identity authentication token is generated based on a second user account of a native APP of the widget. The second identity authentication token is generally allocated by the second server, and the first user account and the second user account are associated user accounts.

On a server side, an account association technology may be used for two CP servers from different manufacturers, to associate two user accounts belonging to different manufacturers. For example, a user account of Huawei is associated with a user account of Gree.

A user account of a manufacturer may be associated, at the same time, with two user accounts belonging to different manufacturers. For example, a user account of Huawei may be associated with a user account of Gree and a user account of Haier at the same time. However, a user account of a manufacturer cannot be associated, at the same time, with two user accounts belonging to a same manufacturer. For example, a user account of Huawei cannot be associated with two user accounts of Gree at the same time. In this application, it may be understood that the first user account of the first server is associated with the second user account of the second server, and the second server shares, with the first server, the second identity authentication token used by the second user account to access the second server, so that the first server holds the identity authentication token used by the second user account to access the second server.

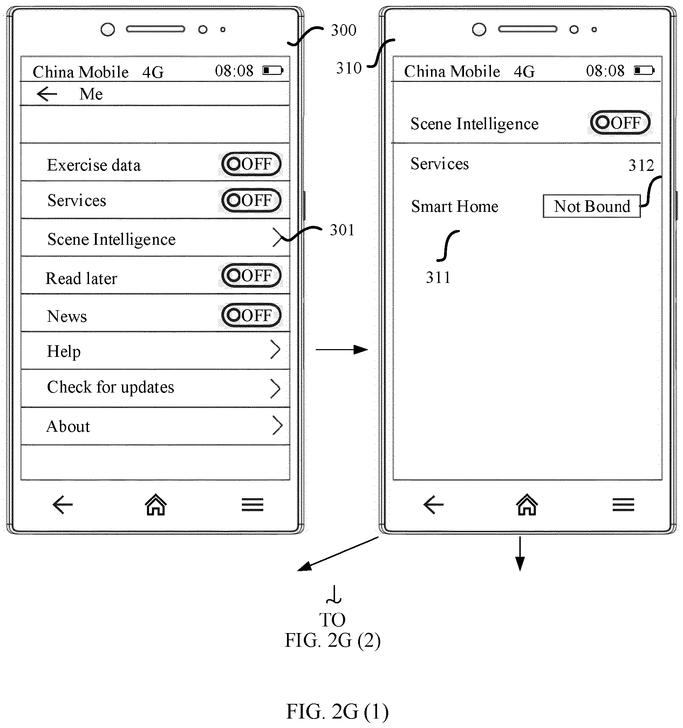

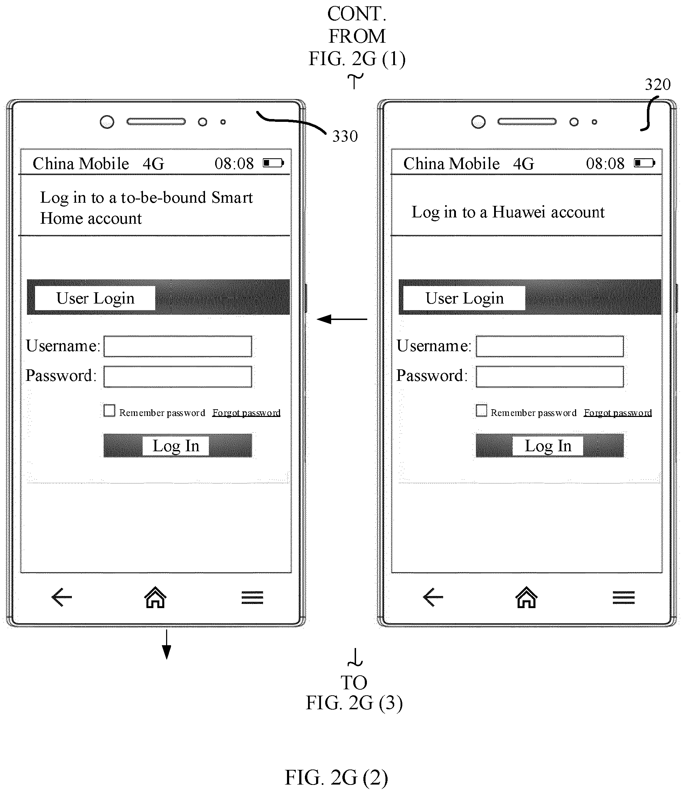

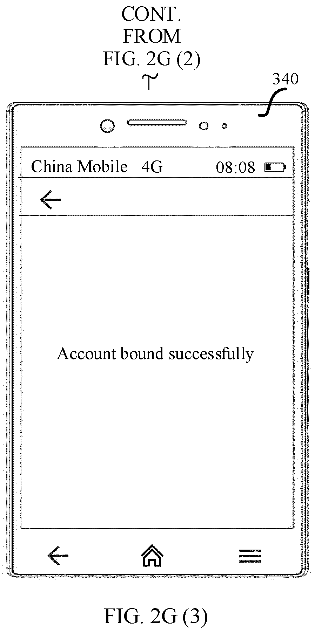

The following describes a specific account association process:
As shown in FIG. 2G (1), a user interface 300 of the host APP includes a button 301 used to bind accounts. The electronic device may display a user interface 310 in response to an operation performed by the user on the button 301. The user interface 310 includes an identifier of a widget on which accounts can be bound, for example, text information or icon information of a native APP of the widget. As shown in FIG. 2G (1), the user interface 310 includes text information of a smart home widget 311, and the user interface 310 may further display a button 312 used to bind accounts, for example, display "Bound" or "Not Bound".

The electronic device identifies, in response to an operation performed by the user on the button 312, whether a first user account of the host APP is currently logged in. If the first user account of the host APP is currently not logged in, a user interface 320 used for account login is displayed. The user may enter the first user account, that is, a user name and a password, in the user interface 320, and log in the first user account. On a HiBoard of a Huawei mobile phone, the first user account is a user account of Huawei. After receiving login success response information sent by the first server, the electronic device jumps to a user interface 330. If the electronic device identifies that the first user account of the host APP is currently logged in, the electronic device may directly jump to the user interface 330. The user interface 330 is a user interface for logging in to the native APP of the widget, in other words, a login interface for the second user account to be bound with an account. When the electronic device jumps to the user interface 330, the host APP may first generate a link used to log in a user account of the native APP of the widget. When the link is opened in the host APP, the electronic device jumps to the user interface 330. An APP to which the user interface 330 belongs is referred to as a native sub-APP, and the host APP may further send, to the native sub-APP, the first user account to be bound with an account. The native sub-APP is a part of the native APP.

The electronic device receives, in the user interface 330, an operation performed by the user on the "Log In"button, and the native sub-APP in the electronic device sends a login request to the second server in response to the operation of the user. The login request includes the second user account and indication information used to indicate to associate accounts. After receiving the login request sent by the native sub-APP, the second server may allocate, for the second user account, a third identity authentication token corresponding to the second user account to the electronic device. For example, the second server sends a response to the login request to the native sub-APP in the electronic device, the response to the login request includes the third identity authentication token, and the third identity authentication token is used to associate the second user account with another user account. The second server stores the third identity authentication token corresponding to the second user account.

For example, after the native sub-APP in the electronic device receives the response to the login request, the native sub-APP may send the third identity authentication token to the host APP, and may further send the first user account to the host APP, so that the host APP learns that the third identity authentication token is to be associated with the first user account. After receiving the third identity authentication token and the first user account, the host APP in the electronic device may send a first account association request to the first server, and the first account association request includes the first user account, an identifier of the second server corresponding to the widget, and the third identity authentication token.

For example, the host APP may not only send, to the native sub-APP, the first user account to be bound with an account, but also send an access address of the first server of the host APP to the native sub-APP. After receiving the response that isto the login request and that is sent by the second server, the native sub-APP may directly send the first user account association request to the first server based on the access address of the first server without using the host APP, and the first user account association request sent by the native sub-APP to the first server includes the first user account, the identifier of the second server corresponding to the widget, and the third identity authentication token. Subsequently, the host APP may query the first server to determine whether the first user account is successfully associated.

The first server receives the first user account association request sent by the electronic device, and the first server sends a second account association request to the identified second server. The second account association request includes the third identity authentication token and the first user account.

After receiving the second account association request sent by the first server, the second server may determine, based on a prestored identity authentication token that corresponds to each user account and that is used for account association, whether the second server stores the third identity authentication token in the second account association request, and if the second server stores the third identity authentication token, the second server identifies the second user account corresponding to the third identity authentication token, and sends a response to the second account association request to the first server. The response to the second account association request includes the first user account and the second identity authentication token, and may further include the second user account.

After receiving the response that isto the second account association request and that is sent by the second server, the first server may store the second identity authentication token for the first user account, and may further store the second user account associated with the first user account.

The first server may further send a response to the first account association request to the electronic device, to indicate that account association succeeds. For example, a user interface 340 shown in FIG. 2G (3) displays prompt information indicating that account association succeeds.

After receiving the first authentication obtaining request, the first server may perform identity authentication on the electronic device based on at least one of the first user account and the first identity authentication token. For a specific authentication process, refer to the foregoing descriptions. Details are not described herein again. If the identity authentication on the electronic device succeeds, the second identity authentication token may be obtained based on at least one of the first user account and the first identity authentication token. For a specific process, for example, it is determined, based on prestored associated user accounts, whether the second user account associated with the first user account is stored, and if the second user account associated with the first user account is stored, the second identity authentication token of the second user account associated with the first user account is obtained. The first server sends the second identity authentication token to the electronic device 100.

When sending the second identity authentication token to the electronic device 100, the first server may send the second identity authentication token, the first identity authentication token, and/or the first user account associated with the second user account corresponding to the second identity authentication token to the electronic device 100 in pairs, so that the electronic device 100 identifies a specific user account with which the second identity authentication token sent by the first server is associated. For example, the response to the first authentication obtaining request includes the second identity authentication token, and may further include the first user account associated with the second user account and/or the first identity authentication token corresponding to the first user account.

In some embodiments, one or more second user accounts associated with the first user account may be stored in the first server. For each second user account, the first server storesan identifier of a second server to which the second user account belongs. To accurately distinguish between identity authentication tokens from different manufacturers (second servers), when sending the second identity authentication token to the electronic device 100, the first server may send, for each second identity authentication token, the second identity authentication token and an identifier of a second server corresponding to the second identity authentication token to the electronic device 100. For example, the response to the first authentication obtaining request includes at least one second identity authentication token and an identifier that corresponds to each identity authentication tokenand that is of a second server allocating the identity authentication token. The host APP in the electronic device 100 stores a manufacturer to which each widget belongs, in other words, stores an identifier of a second server corresponding to each widget. The host APP may save each second identity authentication token to storage space of a corresponding widget based on an identifier of a second server corresponding to the second identity authentication token sent by the first server.

After the electronic device 100 responds to the first operation of the user, one or more widgets may be displayed on the display 194. If a plurality of widgets are displayed, each widget may belong to a different manufacturer, that is, corresponds to a different second server. Alternatively, two displayed widgets belong to a same manufacturer and correspond to a same second server. A widget to be displayed on the display 194 may be determined by setting of the user. In other words, even if a plurality of second user accounts associated with the first user account are stored in the first server, the electronic device may not display a widget of a second server to which a specific second user account belongs. In this way, it is meaningless for the first server to send a second identity authentication token corresponding to the second user account of the undisplayed widget to the host APP in the electronic device, and transmission resources are also wasted. Based on this, the first authentication obtaining request sent by the electronic device 100 to the first server may further include an identifier of a second server corresponding to a to-be-displayed widget, that is, an identifier of a manufacturer to which the widget belongs. It should be noted that the host APP is aware of an identifier of a second server to which each to-be-displayed widget in the user interface belongs. For example, if the to-be-displayed widget includes a smart home widget of a manufacturer Midea, the first authentication obtaining request includes an identifier "Midea". Correspondingly, after receiving the first authentication obtaining request, the first server first performs identity authentication, and then obtains the second identity authentication token based on the identifier of the second server and at least one of the first user account and the first identity authentication token. For a specific process, for example, it is determined, based on prestored associated user accounts, whether the second user account associated with the first user account is stored; and if the second user account associated with the first user account is stored, the second user account associated with the first user account is determined, and further, based on an identifier of a second server corresponding to each prestored second user account, a second user account corresponding to the identifier that is of the second server and that is included in the first authentication obtaining request is selected from the determined second user account associated with the first user account, and then a second identity authentication token corresponding to the selected second user accountis obtained.

When sending the second identity authentication token to the electronic device 100, the first server may send the second identity authentication token and the identifier of the second server corresponding to the second identity authentication token to the electronic device 100 in pairs, so that the electronic device 100 identifies a second server to which the second identity authentication token sent by the first server belongs. For example, the response to the first authentication obtaining request includes the second identity authentication token, and may further include the identifier of the second server corresponding to the second user account.

Step 34: After receiving the response to the first authentication obtaining request, the electronic device 100 sends a first content obtaining request to the second server. The first content obtaining request is used to obtain content information to be displayed in the widget, and the first content obtaining request includes the second identity authentication token.

The electronic device 100 receives, by using the mobile communications module 151 and/or the wireless communications module 152, the second identity authentication token sent by the first server. For example, the processor 110 of the electronic device 100 invokes the host APP, and receives, by using the mobile communications module 151 and/or the wireless communications module 152, the second identity authentication token sent by the first server. The host APP may save the second identity authentication token to the memory space of the widget after loading the widget or before loading the widget. When saving the second identity authentication token to the storage space of the widget, the host APP may save the second identity authentication token by invoking an interface setJsView Data (data), where data is a real value of the second identity authentication token.

Step 35: After receiving the first content obtaining request, the second server performs authentication on the electronic device 100 based on the second identity authentication token, and if the authentication succeeds, sends a first obtaining success response to the first content obtaining request to the electronic device 100. The first obtaining success response includes the content information to be displayed in the widget.

The electronic device 100 sends the first content obtaining request to a second server corresponding to a to-be-displayed widget. The first content obtaining request includes a second identity authentication token used by the to-be-displayed widget to access the second server, and the first content obtaining request is used to obtain content information to be displayed in the widget.

For example, the processor 110 of the electronic device 100 may send the first content obtaining request to the second server by using the mobile communications module 151 and/or the wireless communications module 152. For example, the processor 110 of the electronic device 100 invokes a program of the to-be-displayed widget in the user interface of the host APP, and sends the first content obtaining request to a second server corresponding to the widget by using the mobile communications module 151 and/or the wireless communications module 152.

The host APP in the electronic device may load the widget, and the widget obtains a memory variable "data", in other words, the widget obtains the second identity authentication token (data.cpAccessToken) from memory space of the widget. Further, the widget may send the first content obtaining request to the second server. The first content obtaining request includes the second identity authentication token, and the first content obtaining request is used to obtain content information to be displayed in the widget.

For example, the widget may send a message to the second server by using an HTTPS protocol, and a request header field may carry Authorization: Bearer ACCESS_TOKEN, where ACCESS_TOKEN represents the second identity authentication token, and a real value of data.cp Access Token may be filled in the field and used.

After receiving the first content obtaining request sent by the electronic device, the second server may perform identity authentication on the electronic device 100 based on the second identity authentication token, in other words, authenticate an identity of the user based on ACCESS_TOKEN. For example, the second server determines, based on an identity authentication token corresponding to each prestored user account, whether the second server stores a second user account corresponding to the second identity authentication token, and if the second server stores a second user account corresponding to the second identity authentication token, the identity authentication succeeds. Then, the second server determines, based on configuration information corresponding to each prestored user account, second configuration information corresponding to the second user account, and extracts content information corresponding to the second configuration information, that is, the content information to be displayed in the widget, and then, sends the content information to be displayed in the widget to the electronic device.

It should be noted that the user may also access the second server on a native APP of the widget or a web page of the second server by using the second user account, and perform personalized configuration, for example, configure a team identifier, a stock identifier, or configure an identifier of one or more devices in a smart home. The second server may extract the corresponding content information based on the configuration information corresponding to the second user account, such as game information of a team, stock trend information, and on/off information of the device, and send the corresponding content information to the widget.

It should be noted that one manufacturer may develop a plurality of widgets, and each widget has a corresponding type. For example, a type of an air conditioner widget isair conditioner, a type of a refrigerator widget isrefrigerator, and a type of a smart home widget is smart home. Each widget has a type identifier, and the second server stores a correspondence between a type identifier of each widget and configuration information of the widget. For example, when the user logs in the second user account by using a native APP or a web page and accesses the second server, during personalized configuration of the widget, the user may perform personalized configuration for type identifiers of different widgets, for example, configures a device identifier for a widget whose identifier is smart home, and configures a stock identifier for a widget whose identifier is stock. A plurality of widgets may be displayed in the user interface of the host APP, and each widget may send the first content obtaining request to a second server corresponding to the widget. To enable the second server to clearly distinguish between types of widgets, in step 34, the electronic device 100 sends the first content obtaining request to the second server, and the first content obtaining request includes the second identity authentication token and a type identifier of each to-be-displayed widget. The second server determines, from the second configuration information corresponding to the second user account, configuration information corresponding to the type identifier of each widget, extracts content information corresponding to the configuration information, and sends the type identifier of the widget and the corresponding content information of the widget to the electronic device 100 in pairs. For example, the response to the first content obtaining request includes the type identifier of each widget and content information to be displayed in each widget.

Step 36: After receiving the response to the first content obtaining request, the electronic device 100 displays the second user interface on the display 194 based on information included in the first obtaining success response to the first content obtaining request, where the second user interface includes the widget. Corresponding content information is displayed in each widget.

For example, the electronic device 100 may receive the content information from the second server by using the mobile communications module 151 and/or the wireless communications module 152. For example, the processor 110 of the electronic device 100 invokes the widget, receives, by using the mobile communications module 151 and/or the wireless communications module 152, the content information sent by the second server, and displays the content information.

For example, a developer of the second server develops a smart home widget and a ball game widget, and the user may configure, on the second server by using the second user account, an identifier of an air conditioner in a master bedroom, an identifier of an air conditioner in a secondary bedroom, an identifier of a television set, and an identifier of a lamp for a widget whose type identifier is smart home, and configure an identifier of a team for a widget whose type identifier is ball game. After receiving the first content obtaining request, the second server may identify that a widget from which content information is to be obtained is the smart home widget.

The second server identifies configuration information corresponding to the type identifier of the smart home widget: the identifier of the air conditioner in the master bedroom, the identifier of the air conditioner in the secondary bedroom, the identifier of the television set, the identifier of the lamp, and the like, and then obtains a currently stored status of each device, that is, the content information corresponding to the configuration information, for example, whether the air conditioner in the master bedroom is on or off, operating temperature of the air conditioner in the secondary bedroom, room temperature detected by the air conditioner in the master bedroom, and whether the television set is on or off, and sends the obtained content information to the electronic device 100, and may further send the type identifier "smart home" of the widget.

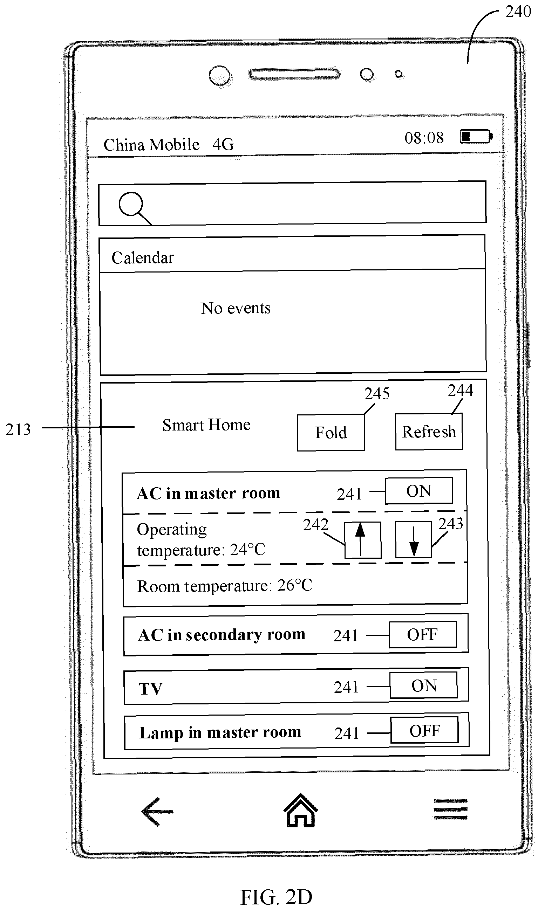

As shown in FIG. 2D, the content information sent by the second server to the electronic device 100 includes: The air conditioner in the master bedroom is in an on state, the operating temperature of the air conditioner is 24°C, the room temperature is 26°C, the air conditioner in the secondary bedroom is in an off state, the television set is in an off state, and a lamp in the master bedroom is in an on state. The content information may further include more information, and the information is not listed one by one herein. The corresponding content information may be displayed in the smart home widget 213 in the user interface 240 of the HiBoard of the electronic device.

To help the user control a status of the device in the smart home, the user interface 240 includes a button 241 used to adjust an on/off state of the device. A word "ON" or "OFF" may be displayed in a display area of the button 241, where "ON" indicates that the device is in an on state, and "OFF" indicates that the device is in an off state. The user may operate the button 241. The electronic device changes the on or off state of the device in response to the operation performed by the user on the button 241. For example, if "ON" is currently displayed, it indicates that the device is in an on state, and the user may tap the button 241 displayed as "ON", so that the state of the device is updated to an off state.

The user interface 240 may further include buttons 242 and 243 used to adjust the operating temperature of the air conditioner. The button 242 (an upward-pointing arrow) may be used to raise the operating temperature of the air conditioner, and the button 243 (a downward-pointing arrow) may be used to reduce the operating temperature of the air conditioner.

The user interface 240 may further include a button 244. A word "Refresh" is displayed in a display area of the button 244, and the button 244 may be used to refresh content displayed in the smart home widget.

If the widget is presented in the form of a card, the card includes a folded state and an unfolded state. A card in the folded state has a specified size. When there are a relatively large quantity of devices, generally, status information of all the devices cannot be displayed in the card in the folded state. When the card is in the unfolded state, a size of the user interface is not considered, and generally, preconfigured statuses of all the devices can be displayed. The user interface 240 may further include a button 245. The button 245 may be used to change an unfolded or folded state of a card. A word "Unfold" or "Fold" is displayed in a display area of the button 245. For example, when the displayed word is "Unfold", it indicates that the card is in the folded state, and when the displayed word is "Fold", it indicates that the card is in the unfolded state.

Based on the foregoing process, corresponding content that has been obtained by the electronic device 100 from a second server side is displayed in the widget, and the user may perform further interaction on the widget.

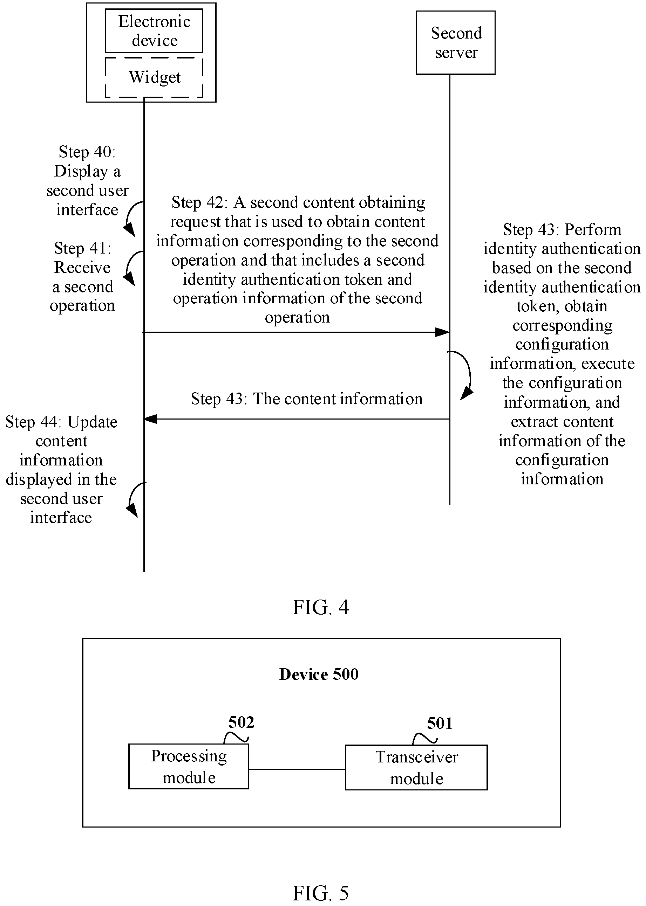

For example, FIG. 4 is a schematic flowchart of a content display method according to an embodiment of this application. Specifically, the method includes the following steps.

Step 40: An electronic device 100 displays a second user interface on a display 194, where the second user interface includes a widget.

The second user interface is the second user interface displayed in step 36.

It should be noted that a first user interface may be a homescreen,a HiBoard, ora user interface of an application. This is not limited.

Step 41: The electronic device receives a second operation performed by a user on the displayed widget, where the second operation is used to control the electronic device 100 to update content information displayed in the widget.

For example, the second operation may be an operation performed by the user on a specific widget, or a sliding operation, a tapping operation, a double tapping operation, a voice instruction, or a shortcut gesture operation in the second user interface. This is not limited.

In the following example descriptions, the second operation is an operation performed by the user on a specific widget. In this case, the second operation is used to control the electronic device 100 to update, based on operation information of the second operation, content information in the widget displayed on the display 194.

If the second operation is a touch operation, a touch sensor 182 of the electronic devicedetects a touch operation performed by the user on the display 194, and the touch sensor 182 reports touch position information of the user on the display 194 to a processor 110. The processor 100 determines, based on the touch position information, that the touch sensor 182 receives the second operation.

Step 42: The electronic device 100 sends a second content obtaining request to a second server in response to the second operation, where the second content obtaining request includes a second identity authentication token and the operation information of the second operation, and the second content obtaining request is used to obtain content information corresponding to the operation information of the second operation, that is, content information to be updated for display in the widget.

The second content obtaining request may further include a type identifier of the widget. If the second operation is a touch operation, the type identifier of the widget in the second content obtaining request is a type identifier of a widget displayed at a touch position of the second operation.

Specifically, the widget may further send a control message to the second server (a request header field carries Authorization: Bearer ACCESS_TOKEN, and a real value of data.cp AccessToken is filled in ACCESS_TOKEN and used herein). A principle of sending the second content obtaining request to the second server by the electronic device in step 42 is similar to a principle of sending the first content obtaining request to the second server by the electronic device in step 34, and repeated parts are not described again.

Step 43: After receiving the second content obtaining request sent by the electronic device, the second server may perform a process corresponding to the operation information after authentication performed on the electronic device 100 based on the second identity authentication token succeeds, and send a second obtaining success response to the second content obtaining request to the electronic device 100. The second obtaining success response includes the content information to be updated for display in the widget, that is, the content information corresponding to the operation information of the second operation.

A process performed by the second server after receiving the second content obtaining request in step 43 is similar to the foregoing process performed by the second server after receiving the first content obtaining request in step 35, and repeated parts are not described again.

Step 44: After receiving the second obtaining success response that isto the second content obtaining request and that is sent by the second server, the electronic device 100 updates, based on the content information included in the second obtaining success response, the content information displayed in the widget.

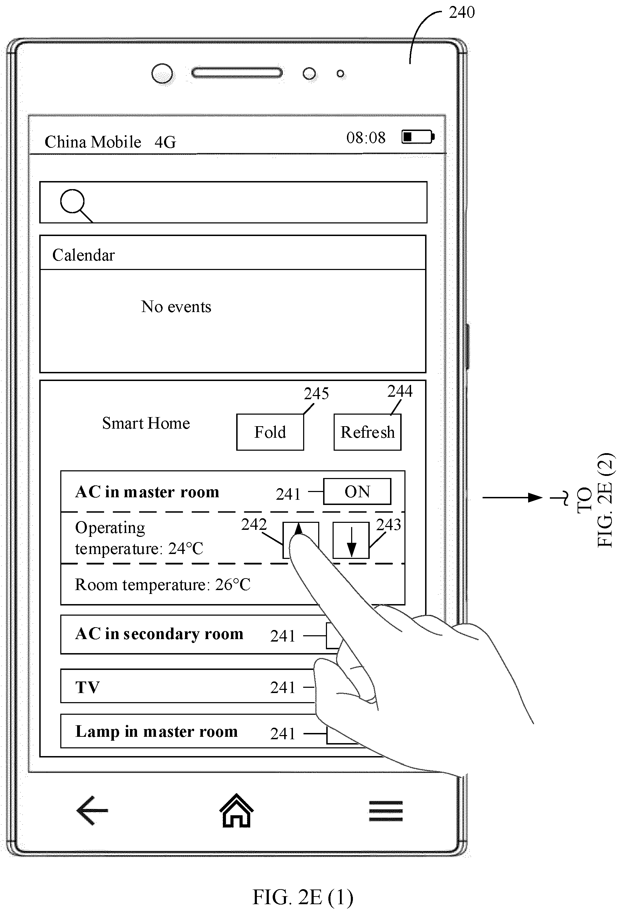

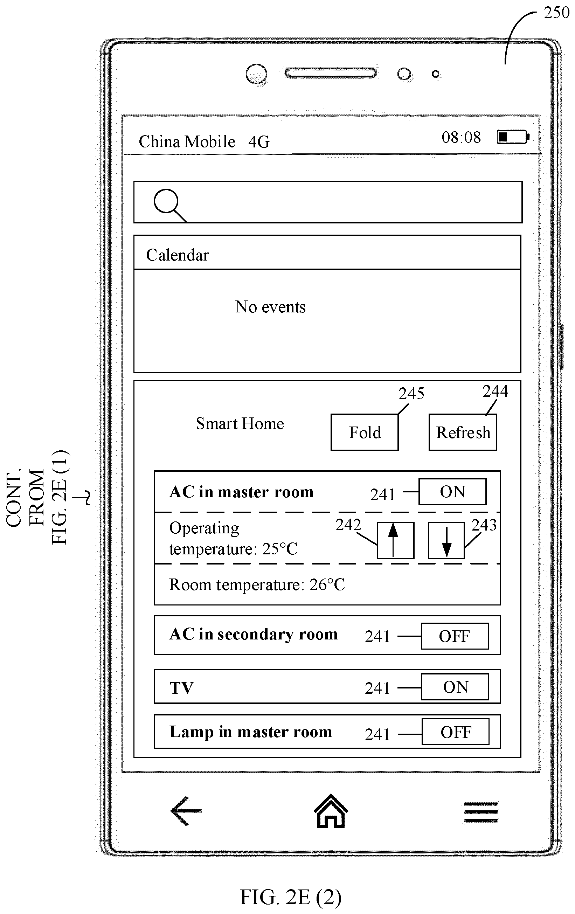

In a user interface 240 and a user interface 250 shown in FIG. 2E (1) and FIG. 2E (2), for example, the user performs a temperature raising operation for temperature of an air conditioner in a master bedroom, in other words, taps a button 242 (an upward-pointing arrow), and an operation of tapping the button 242 is the second operation. It is assumed that the temperature is raised by 1°C if the button 242 is tapped once, and the operation information of the second operation in the second content obtaining request sent by the electronic device 100 and received by the second server is "to raise operating temperature of the air conditioner in the master bedroom by 1°C". The second server may send a temperature raise indication to the corresponding air conditioner in the master bedroom, and return "the operating temperature of the air conditioner in the master bedroom is 25°C" to the electronic device 100, or return "the temperature of the air conditioner in the master bedroom is raised by 1°C". The electronic device 100 may change, based on the content information sent by the second server, a status of a device displayed in a smart home widget, in other words, updates the operating temperature from original 24°C to 25°C.

Operations performed by the user on a button 244, a button 241, and a button 243 may each be used as the second operation. For example, when the second operation is the operation performed on the button 243, the operation information of the second operation is "to reduce the operating temperature of the air conditioner in the master bedroom by n°C", and a value of n is related to a quantity of operations and a preset value corresponding to one operation.

For example, when the second operation is the operation on the button 241 corresponding to the air conditioner in the master bedroom, information about the second operation is closing the master bedroom, or opening the master bedroom. For another example, when the second operation is the operation on the button 241 corresponding to a television set, information about the second operation is turning off the television set, or turning on the television set.

An identity authentication token used to access the second server to obtain a resource of the second server has a validity period, and the validity period is usually 24 hours, 12 hours, 72 hours, or the like. After the validity period expires, the identity authentication token fails, and a server resource cannot be obtained by using the identity authentication token. The second server of the widget may record generation time of each identity authentication token used to access the second server, and record a validity time. After it is determined that the validity time of the authentication token expires, the second server may generate a new identity authentication token, and update the previous identity authentication token to the new identity authentication token. The second server may actively share the new identity authentication token with the first server. Certainly, the first server may alternatively record generation time of the identity authentication token used to access the second server, and record a validity time. After it is determined that the validity time of the authentication token expires, the first server may request a new identity authentication token from the second server, and the second server sends the new identity authentication token to the first server based on the request of the first server.

If an identity authentication token obtained in a previous time fails, after receiving a content obtaining request sent by the electronic device 100, the second server cannot find a second user account corresponding to the second identity authentication token from the content obtaining request. This indicates that the second identity authentication tokenfails, and the second server may send content obtaining failure response information to the electronic device 100. When the electronic device 100 receives a content obtaining failure response, the electronic device may first not update content information displayed in the widget. The electronic device 100 may send a second authentication token obtaining request to the first server, the second authentication token obtaining request includes a first identity authentication token allocated by the first server to the electronic device, and the second authentication token obtaining request is used to re-obtain the second identity authentication token used to access the second server. A process in which the electronic device 100 sends the second authentication token obtaining request to the first server is the same as the foregoing process in which the electronic device 100 sends the first authentication obtaining request to the first server in step 32, and repeated parts are not described again.

A process performed by the first server after receiving the second authentication token obtaining request sent by the electronic device 100 is the same as that in step 33, and repeated parts are not described again.

After receiving a response that isto the second authentication token obtaining request and that is sent by the first server, the electronic device re-sends the second content obtaining request to the second server, where the response to the second authentication token obtaining request includes the updated second identity authentication token, and the second content obtaining request includes the operation information of the second operation and the updated second identity authentication token. When receiving an obtaining success response to the second content obtaining request, the electronic device 100 updates the content information displayed in the widget.

For example, after receiving response information indicating that the identity authentication token sent by the second server fails, the widget in the electronic device may send a message for requesting reloading to a host APP, and the message carries the operation information corresponding to the second operation of the user.

For example, a reloading message may be as follows:
sendMessage("{\"command\":\"reload\",\"context\" :{\"unfinishedOperation\":\"xxxx\"}}"), where end message indicates that the widget sends a message to the host APP, command indicates that an action indicated by the message is to reload (reload) the widget, context indicates context, content of the context stores an unfinished operation (unfinished operation), and "xxx" is a name of a specific unfinished operation, for example, to raise temperature of the air conditioner in the master bedroom by 1°C.

After receiving the message for reloading the widget, as described in step 32, the host APP may send a first authentication obtaining request to the first server, where the first authentication obtaining request includes the first identity authentication token that is allocated by the first server to the first user account and that is used to access the first server. When obtaining the new second identity authentication token used to access the second server, the host APP saves the obtained new second identity authentication token to memory space of the widget. The host APP may further send the operation information corresponding to the second operation to the widget, and the operation information has not been performed.

After obtaining the new second identity authentication token, the widget may access the second server based on a second operation that is not finished in a previous time and the obtained new second identity authentication token, perform the second operation, and display content information required by the second operation.

Currently, for a specific reason, the obtained new identity authentication token may also be invalid. To avoid repeated reloading of the widget, the host APP further needs to suppress a frequency of refreshing the widget. For example, one widget is allowed to be refreshed only once or twice in one minute.

In the foregoing embodiments provided in this application, the method provided in the embodiments of this application is described from perspectives of the electronic device, the first server, and the second server being used as execution bodies. To implement functions in the method provided in the foregoing embodiments of this application, a device such as the electronic device, the first server, and the second server may include a hardware structure and/or a software module, and the foregoing functions are implemented in a form of the hardware structure, the software module, or the hardware structure and the software module. Whether a function in the foregoing functions is performed in the hardware structure, the software module, or the hardware structure and the software module depends on a specific application and a design constraint condition of the technical solutions.

Based on a same concept, FIG. 5 shows a device 500 according to this application. For example, the device 500 includes a transceiver module 501 and a processing module 502.

For example, when the device 500 is an electronic device, the device 500 may perform steps performed by the electronic device in the display method shown in FIG. 3. For example, the transceiver module 501 may be configured to perform step 32 and step 34, and the processing module 502 may be configured to perform step 36. The device 500 may alternatively perform steps performed by the electronic device in the display method shown in FIG. 4. For example, the transceiver module 501 may be configured to perform step 42 and step 43, and the processing module 502 may be configured to perform step 40, step 41, and step 44.

For example, when the device 500 is a first server, the device 500 may perform the steps performed by the first server in the display method shown in FIG. 3. For example, the transceiver module 501 may be configured to perform receiving and sending operations in step 33. The processing module 502 may be configured to perform the operation of obtaining the second identity authentication token in step 33. The device 500 may alternatively perform the steps performed by the first server in the display method shown in FIG. 4.

For example, when the device 500 is a second server, the device 500 may perform the steps performed by the second server in the display method shown in FIG. 3. For example, the transceiver module 501 may be configured to perform receiving and sending operations in step 35. The processing module 502 may be configured to perform the authentication operation in step 35. The device 500 may alternatively perform the steps performed by the second server in the display method shown in FIG. 4.

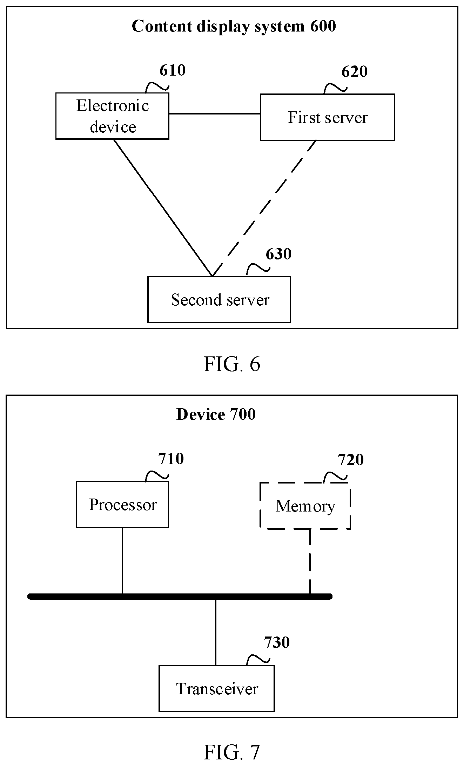

Based on a same concept, FIG. 7 shows a device 700 according to this application. The device 700 includes at least one processor 710, a memory 720, and a transceiver 730. The processor 710 is coupled to the memory 720 and the transceiver 730. Coupling in this embodiment of this application is indirect coupling or a communication connection between apparatuses, units, or modules, and may be in an electrical, mechanical, or another form, and is used for information exchange between apparatuses, units, or modules. A connection medium between the transceiver 730, the processor 710, and the memory 720 is not limited in this embodiment of this application. For example, in this embodiment of this application, in FIG. 7, the memory 720, the processor 710, and the transceiver 730 may be connected by using a bus, and the bus may be classified into an address bus, a data bus, a control bus, and the like.

Specifically, the memory 720 may be configured to store program instructions.

The transceiver 730 is configured to receive or send data.

The processor 710 is configured to invoke the program instructions stored in the memory 720, so that the device 700 performs steps performed by the electronic device in FIG. 3 or FIG. 4, or performs steps performed by the first server or the second server in FIG. 3 or FIG. 4.

In the embodiments of this application, the processor 710 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the disclosedmethod with reference to the embodiments of this application may be directly performed by a hardware processor, or may be performed by using a combination of a hardware module and a software modulein the processor.

In this embodiment of this application, the memory 720 may be a non-volatile memory such as a hard disk drive (hard disk drive, HDD) or a solid-state drive (solid-state drive, SSD), or may be a volatile memory (volatile memory) such as a random access memory (random-access memory, RAM). The memory is any other medium that can be used to carry or store expected program code in a form of an instruction or a data structure and that can be accessed by the computer, but is not limited thereto. The memory in this embodiment of this application may be a circuit or any other apparatus that can implement a storage function, and is configured to store program instructions and/or data.

It should be understood that the device 500 and the device 700 may be configured to implement the methods shown in FIG. 3 and FIG. 4 in the embodiments of this application. For related features, refer to the foregoing descriptions. Details are not described herein again.

As shown in FIG. 6, an embodiment of this application provides a content display system 600. The system includes an electronic device 610, a first server 620, and a second server 630 that perform the foregoing content display process.

A person skilled in the art may clearly understand that the embodiments of this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. This is used as an example but is not limited to: a computer readable medium such as a RAM, a ROM, an electrically erasable programmable read-only memory (electrically erasable programmable read only memory, EEPROM), a compact disc read-only memory (compact disc read-Only memory, CD-ROM) or another optical disk storage, a magnetic disk storage medium or another magnetic storage device, or any other medium that can be used to carry or store expected program code in a form of an instruction or a data structure and that can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (digital subscriber line, DSL), or wireless technologies such as infrared ray, radio, and microwave, the coaxial cable, optical fiber/cable, twisted pair, DSL, or wireless technologies such as infrared ray, radio, and microwave are included in a definition of a medium to which they belong. A disk (disk) and disc (disc) used by the embodiments of this application includes a compact disc (compact disc, CD), a laser disc, an optical disc, a digital video disc (digital video disc, DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely embodiments of this application, but is not intended to limit the protection scope of this application. Any modification, equivalent replacement, and improvement made in accordance with the disclosure of this application shall be included in the protection scope of this application.

## Claims

1. A display method, comprising:
displaying (30), by an electronic device, a first user interface;
receiving (31), by the electronic device, a first operation of a user, wherein the first operation is used to control the electronic device to display a second user interface, and the second user interface comprises a widget;
sending (32), by the electronic device, a first authentication obtaining request to a first server in response to the first operation, wherein the first authentication obtaining request comprises a first identity authentication token, the first identity authentication token is allocated by the first server to the electronic device based on a first user account of a host APP of the widget, the first authentication obtaining request is used to obtain a second identity authentication token used to access a second server, the first identity authentication token is associated with the second identity authentication token, the second identity authentication token is generated based on a second user account of a native APP of the widget and allocated by the second server, the first user account and the second user account are associated user accounts, the first server is a CP server configured to provide content of the host APP, and the second server is a content provider, CP, server of the widget;
after the electronic device receives a response that is to the first authentication obtaining request and that is sent by the first server, sending (34), by the electronic device, a first content obtaining request to the second server, wherein the response to the first authentication obtaining request comprises the second identity authentication token, the first content obtaining request comprises the second identity authentication token, and the first content obtaining request is used to obtain content information to be displayed in the widget; and
after the electronic device receives a first obtaining success response to the first content obtaining request, displaying (36), by the electronic device, the second user interface based on content information comprised in the first obtaining success response.

2. The method according to claim 1, further comprising:
displaying, by the electronic device, a third user interface, wherein the third user interface comprises a user account input area;
sending, by the electronic device, a first request to the first server in response to an operation indicating that the user finishes entering the first user account into the user account input area, wherein the first request is used by the electronic device to log in to or register with the first server, and the first request comprises the first user account; and receiving, by the electronic device, a response that is to the first request and that is sent by the first server, wherein
the response to the first request comprises the first identity authentication token, and the first identity authentication token is allocated by the first server to the electronic device based on the first user account.

3. The method according to claim 1 or 2, wherein after the electronic device displays the second user interface, the method further comprises:
sending, by the electronic device, a second content obtaining request to the second server in response to a second operation performed on the widget, wherein the second content obtaining request comprises the second identity authentication token and operation information of the second operation, and the second content obtaining request is used to obtain content information corresponding to the operation information of the second operation; and
after the electronic device receives a second obtaining success response that is to the second content obtaining request and that is sent by the second server, updating, by the electronic device based on the second obtaining success response, content information displayed in the widget, wherein the second obtaining success response comprises the content information corresponding to the operation information of the second operation.

4. The method according to claim 3, wherein if the second identity authentication token comprised in the second content obtaining request is invalid, the method further comprises:
sending, by the electronic device, a second authentication obtaining request to the first server after the electronic device receives a content obtaining failure response sent by the second server, wherein the second authentication obtaining request comprises the first identity authentication token, and the second authentication obtaining request is used to re-obtain the second identity authentication token used to access the second server; and
after the electronic device receives a response that is to the second authentication obtaining request and that is sent by the first server, re-sending, by the electronic device, the second content obtaining request to the second server, wherein a response to the second content obtaining request comprises a reallocated second identity authentication token, and the re-sent second content obtaining request comprises the reallocated second identity authentication token and the operation information of the second operation.

5. The method according to any one of claims 1 to 4, wherein the first authentication obtaining request further comprises an identifier of the second server.

6. A display method, comprising:
receiving (32), by a first server, a first authentication obtaining request sent by an electronic device, wherein the first authentication obtaining request comprises a first identity authentication token, the first identity authentication token is allocated by the first server to the electronic device based on a first user account of a host APP of a widget, the first authentication obtaining request is used to obtain a second identity authentication token used to access a second server, the first identity authentication token is associated with the second identity authentication token, the second identity authentication token is generated based on a second user account of a native APP of the widget and allocated by the second server, the first user account and the second user account are associated user accounts, the first server is a CP server configured to provide the content of the host APP, and the second server is a content provider, CP, server of the widget;
determining, by the first server, the second identity authentication token based on the first identity authentication token and a prestored association relationship between an identity authentication token allocated by the first server to the electronic device and an identity authentication token used to access the second server; and
sending (33), by the first server, a response to the first authentication obtaining request to the electronic device, wherein the response to the first authentication obtaining request comprises the second identity authentication token.

7. The method according to claim 6, wherein the first authentication obtaining request further comprises an identifier of the second server, and
the determining, by the first server, the second identity authentication token based on the first identity authentication token and a prestored association relationship between an identity authentication token allocated by the first server to the electronic device and an identity authentication token used to access the second server comprises:
determining, by the first server based on the first identity authentication token and the prestored association relationship between the identity authentication token allocated by the first server to the electronic device and the identity authentication token used to access the second server, one or more identity authentication tokens associated with the first identity authentication token; and
determining, by the first server based on the identifier of the second server, the second identity authentication token from the one or more identity authentication tokens associated with the first identity authentication token.

8. A device, wherein the device comprises a processor and a memory, wherein
the memory stores program instructions; and
when the program instructions are executed, the device is enabled to perform the method according to any one of claims 1 to 5.

9. A device, wherein the device comprises a processor and a memory, wherein
the memory stores program instructions; and
when the program instructions are executed, the device is enabled to perform the method according to claim 6 or 7.

10. A chip, wherein the chip is coupled to a memory in a device, so that the chip invokes, when running, program instructions stored in the memory, to implement the method according to any one of claims 1 to 5.

11. A chip, wherein the chip is coupled to a memory in a device, so that the chip invokes, when running, program instructions stored in the memory, to implement the method according to claim 6 or 7.

12. A computer-readable storage medium, wherein the computer-readable storage medium comprises program instructions, and when the program instructions are run on a device, the device is enabled to perform the method according to any one of claims 1 to 5.

13. A computer-readable storage medium, wherein the computer-readable storage medium comprises program instructions, and when the program instructions are run on a device, the device is enabled to perform the method according to claim 6 or 7.

## Patentansprüche

1. Anzeigeverfahren, das umfasst:
Anzeigen (30), durch ein elektronisches Gerät, einer ersten Benutzerschnittstelle;
Empfangen (31), durch das elektronische Gerät, eines ersten Vorgangs eines Benutzers, wobei der erste Vorgang zum Steuern des elektronischen Geräts zum Anzeigen einer zweiten Benutzerschnittstelle verwendet wird und die zweite Benutzerschnittstelle ein "Widget" umfasst;
Senden (32), durch das elektronische Gerät, einer ersten Authentifizierungserhaltungsanforderung an einen ersten Server als Reaktion auf den ersten Vorgang, wobei die erste Authentifizierungserhaltungsanforderung ein erstes Identitätsauthentifizierungs-"Token" umfasst, das erste Identitätsauthentifizierungs-"Token" dem elektronischen Gerät durch den ersten Server basierend auf einem ersten Benutzerkonto einer "Host-APP" des "Widget" zugeordnet wird, die erste Authentifizierungserhaltungsanforderung zum Erhalten eines zweiten Identitätsauthentifizierungs-"Token" verwendet wird, das zum Zugreifen auf einen zweiten Server verwendet wird, das erste Identitätsauthentifizierungs-"Token" mit dem zweiten Identitätsauthentifizierungs-"Token" assoziiert ist, das zweite Identitätsauthentifizierungs-"Token" basierend auf einem zweiten Benutzerkonto einer nativen "APP" des "Widget" erzeugt und durch den zweiten Server zugeordnet wird, das erste Benutzerkonto und das zweite Benutzerkonto assoziierte Benutzerkonten sind, der erste Server ein CP-Server ist, der zum Bereitstellen von Inhalt des "Host-APP* ausgelegt ist, und der zweite Server ein Inhaltsanbieterserver, CP-Server, des "Widget" ist;
nachdem das elektronische Gerät eine Antwort empfängt, die auf die erste Authentifizierungserhaltungsanforderung erfolgt und die durch den ersten Server gesendet wird, Senden (34), durch das elektronische Gerät, einer ersten Inhaltserhaltungsanforderung an den zweiten Server, wobei die Antwort auf die erste Authentifizierungserhaltungsanforderung das zweite Identitätsauthentifizierungs-"Token" umfasst, die erste Inhaltserhaltungsanforderung das zweite Identitätsauthentifizierungs-"Token" umfasst und die erste Inhaltserhaltungsanforderung zum Erhalten von Inhaltsinformationen, die im "Widget" angezeigt werden sollen, verwendet wird; und
nachdem das elektronische Gerät eine erste Erhaltungserfolgsantwort auf die erste Inhaltserhaltungsanforderung empfängt, Anzeigen (36), durch das elektronische Gerät, der zweiten Benutzerschnittstelle basierend auf Inhaltsinformationen, die in der ersten Erhaltungserfolgsantwort enthalten sind.

2. Verfahren nach Anspruch 1, das ferner umfasst:
Anzeigen, durch das elektronische Gerät, einer dritten Benutzerschnittstelle, wobei die dritte Benutzerschnittstelle einen Benutzerkontoeingabebereich umfasst;
Senden, durch das elektronische Gerät, einer ersten Anforderung an den ersten Server als Reaktion auf einen Vorgang, der angibt, dass der Benutzer das Eingeben des ersten Benutzerkontos in den Benutzerkontoeingabebereich beendet, wobei die erste Anforderung durch das elektronische Gerät zum Anmelden oder Registrieren beim ersten Server verwendet wird und die erste Anforderung das erste Benutzerkonto umfasst; und Empfangen, durch das elektronische Gerät, einer Antwort, die auf die erste Anforderung erfolgt und die durch den ersten Server gesendet wird, wobei
die Antwort auf die erste Anforderung das erste Identitätsauthentifizierungs-"Token" umfasst und das erste Identitätsauthentifizierungs-"Token" dem elektronischen Gerät durch den ersten Server basierend auf dem ersten Benutzerkonto zugeordnet wird.

3. Verfahren nach Anspruch 1 oder 2, wobei, nachdem das elektronische Gerät die zweite Benutzerschnittstelle anzeigt, das Verfahren ferner umfasst:
Senden, durch das elektronische Gerät, einer zweiten Inhaltserhaltungsanforderung an den zweiten Server als Reaktion auf einen zweiten Vorgang, der auf dem "Widget" durchgeführt wird, wobei die zweite Inhaltserhaltungsanforderung das zweite Identitätsauthentifizierungs-"Token" und Vorgangsinformationen des zweiten Vorgangs umfasst und die zweite Inhaltserhaltungsanforderung zum Erhalten von Inhaltsinformationen entsprechend den Vorgangsinformationen des zweiten Vorgangs verwendet wird; und
nachdem das elektronische Gerät eine zweite Erhaltungserfolgsantwort empfängt, die auf die zweite Inhaltserhaltungsanforderung erfolgt und die durch den zweiten Server gesendet wird, Aktualisieren, durch das elektronische Gerät basierend auf der zweiten Erhaltungserfolgsantwort, von Inhaltsinformationen, die im "Widget" angezeigt werden, wobei die zweite Erhaltungserfolgsantwort die Inhaltsinformationen entsprechend den Vorgangsinformationen des zweiten Vorgangs umfasst.

4. Verfahren nach Anspruch 3, wobei, wenn das zweite Identitätsauthentifizierungs-"Token", das in der zweiten Inhaltserhaltungsanforderung enthalten ist, ungültig ist, das Verfahren ferner umfasst:
Senden, durch das elektronische Gerät, einer zweiten Authentifizierungserhaltungsanforderung an den ersten Server, nachdem das elektronische Gerät eine Inhaltserhaltungsfehlerantwort empfängt, die durch den zweiten Server gesendet wird, wobei die zweite Authentifizierungserhaltungsanforderung das erste Identitätsauthentifizierungs-"Token" umfasst und die zweite Authentifizierungserhaltungsanforderung zum erneuten Erhalten des zweiten Identitätsauthentifizierungs-"Token", das zum Zugreifen auf den zweiten Server verwendet wird, verwendet wird; und
nachdem das elektronische Gerät eine Antwort empfängt, die auf die zweite Authentifizierungserhaltungsanforderung erfolgt und die durch den ersten Server gesendet wird, erneutes Senden, durch das elektronische Gerät, der zweiten Inhaltserhaltungsanforderung an den zweiten Server, wobei eine Antwort auf die zweite Inhaltserhaltungsanforderung ein neu zugeordnetes zweites Identitätsauthentifizierungs-"Token" umfasst und die neu gesendete zweite Inhaltserhaltungsanforderung das neu zugeordnete zweite Identitätsauthentifizierungs-"Token" und die Vorgangsinformationen des zweiten Vorgangs umfasst.

5. Verfahren nach einem der Ansprüche 1 bis 4, wobei die erste Authentifizierungserhaltungsanforderung ferner einen Identifikator des zweiten Servers umfasst.

6. Anzeigeverfahren, das umfasst:
Empfangen (32), durch einen ersten Server, einer ersten Authentifizierungserhaltungsanforderung, die durch ein elektronisches Gerät gesendet wird, wobei die erste Authentifizierungserhaltungsanforderung ein erstes Identitätsauthentifizierungs-"Token" umfasst, das erste Identitätsauthentifizierungs-"Token" dem elektronischen Gerät durch den ersten Server basierend auf einem ersten Benutzerkonto einer "Host-APP" eines "Widget" zugeordnet wird, die erste Authentifizierungserhaltungsanforderung zum Erhalten eines zweiten Identitätsauthentifizierungs-"Token" verwendet wird, das zum Zugreifen auf einen zweiten Server verwendet wird, das erste Identitätsauthentifizierungs-"Token" mit dem zweiten Identitätsauthentifizierungs-"Token' assoziiert ist, das zweite Identitätsauthentifizierungs-"Token" basierend auf einem zweiten Benutzerkonto einer nativen "APP" des "Widget" erzeugt und durch den zweiten Server zugeordnet wird, das erste Benutzerkonto und das zweite Benutzerkonto assoziierte Benutzerkonten sind, der erste Server ein CP-Server ist, der zum Bereitstellen des Inhalts des "Host-APP*" ausgelegt ist, und der zweite Server ein Inhaltsanbieterserver, CP-Server, des "Widget" ist;
Bestimmen, durch den ersten Server, des zweiten Identitätsauthentifizierungs-"Token" basierend auf dem ersten Identitätsauthentifizierungs-"Token" und einer vorgespeicherten Zuordnungsbeziehung zwischen einem Identitätsauthentifizierungs-"Token", das dem elektronischen Gerät durch den ersten Server zugeordnet wird, und einem Identitätsauthentifizierungs-"Token", das zum Zugreifen auf den zweiten Server verwendet wird; und
Senden (33), durch den ersten Server, einer Antwort auf die erste Authentifizierungserhaltungsanforderung an das elektronische Gerät, wobei die Antwort auf die erste Authentifizierungserhaltungsanforderung das zweite Identitätsauthentifizierungs-"Token" umfasst.

7. Verfahren nach Anspruch 6, wobei die erste Authentifizierungserhaltungsanforderung ferner einen Identifikator des zweiten Servers umfasst und
das Bestimmen, durch den ersten Server, des zweiten Identitätsauthentifizierungs-"Token" basierend auf dem ersten Identitätsauthentifizierungs-"Token" und einer vorgespeicherten Zuordnungsbeziehung zwischen einem Identitätsauthentifizierungs-"Token", das dem elektronischen Gerät durch den ersten Server zugeordnet wird, und einem Identitätsauthentifizierungs-"Token", das zum Zugreifen auf den zweiten Server verwendet wird, umfasst:
Bestimmen, durch den ersten Server basierend auf dem ersten Identitätsauthentifizierungs-"Token" und der vorgespeicherten Zuordnungsbeziehung zwischen dem Identitätsauthentifizierungs-"Token", das dem elektronischen Gerät durch den ersten Server zugeordnet wird, und dem Identitätsauthentifizierungs-"Token", das zum Zugreifen auf den zweiten Server verwendet wird, eines oder mehrerer Identitätsauthentifizierungs-"Token", das/die dem ersten Identitätsauthentifizierungs-"Token" zugeordnet ist/sind; und
Bestimmen, durch den ersten Server basierend auf dem Identifikator des zweiten Servers, des zweiten Identitätsauthentifizierungs-"Token" von dem einen oder den mehreren Identitätsauthentifizierungs-"Token", das/die dem ersten Identitätsauthentifizierungs-"Token" zugeordnet ist/sind.

8. Gerät, wobei das Gerät einen Prozessor und einen Speicher umfasst, wobei
der Speicher Programmanweisungen speichert; und
wenn die Programmanweisungen ausgeführt werden, das Gerät zum Durchführen des Verfahrens nach einem der Ansprüche 1 bis 5 befähigt ist.

9. Gerät, wobei das Gerät einen Prozessor und einen Speicher umfasst, wobei
der Speicher Programmanweisungen speichert; und
wenn die Programmanweisungen ausgeführt werden, das Gerät zum Durchführen des Verfahrens nach Anspruch 6 oder 7 befähigt ist.

10. Chip, wobei der Chip an einen Speicher in einem Gerät gekoppelt ist, sodass der Chip bei Ausführung Programmanweisungen aufruft, die im Speicher gespeichert sind, um das Verfahren nach einem der Ansprüche 1 bis 5 zu implementieren.

11. Chip, wobei der Chip an einen Speicher in einem Gerät gekoppelt ist, sodass der Chip bei Ausführung Programmanweisungen aufruft, die im Speicher gespeichert sind, um das Verfahren nach Anspruch 6 oder 7 zu implementieren.

12. Computerlesbares Speichermedium, wobei das computerlesbare Speichermedium Programmanweisungen umfasst, und wenn die Programmanweisungen auf einem Gerät ausgeführt werden, das Gerät zum Durchführen des Verfahrens nach einem der Ansprüche 1 bis 5 befähigt ist.

13. Computerlesbares Speichermedium, wobei das computerlesbare Speichermedium Programmanweisungen umfasst, und wenn die Programmanweisungen auf einem Gerät ausgeführt werden, das Gerät zum Durchführen des Verfahrens nach Anspruch 6 oder 7 befähigt ist.

## Revendications

1. Procédé d'affichage, comprenant :
l'affichage (30), par un dispositif électronique, d'une première interface d'utilisateur ;
la réception (31), par le dispositif électronique, d'une première opération d'un utilisateur, dans lequel la première opération est utilisée pour commander au dispositif électronique d'afficher une deuxième interface d'utilisateur, et la deuxième interface d'utilisateur comprend un gadget logiciel ;
l'envoi (32), par le dispositif électronique, d'une première requête d'obtention d'authentification à un premier serveur en réponse à la première opération, dans lequel la première requête d'obtention d'authentification comprend un premier jeton d'authentification d'identité, le premier jeton d'authentification d'identité est alloué par le premier serveur au dispositif électronique sur la base d'un premier compte d'utilisateur d'un hôte APP du gadget logiciel, la première requête d'obtention d'authentification est utilisée pour obtenir un deuxième jeton d'authentification d'identité utilisé pour accéder à un deuxième serveur, le premier jeton d'authentification d'identité est associé au deuxième jeton d'authentification d'identité, le deuxième jeton d'authentification d'identité est généré sur la base d'un deuxième compte d'utilisateur d'un APP natif du gadget logiciel et alloué par le deuxième serveur, le premier compte d'utilisateur et le deuxième compte d'utilisateur sont associés à des comptes d'utilisateurs, le premier serveur est un serveur CP configuré pour fournir un contenu de l'hôte APP, et le deuxième serveur est serveur de fournisseur de contenu, CP, du gadget logiciel ;
après la réception, par le dispositif électronique, d'une réponse à la première requête d'obtention d'authentification et qui est envoyée par le premier serveur, l'envoi (34), par le dispositif électronique, d'une première requête d'obtention de contenu au deuxième serveur, dans lequel la réponse à la première requête d'obtention d'authentification comprend le deuxième jeton d'authentification d'identité, la première requête d'obtention de contenu comprend le deuxième jeton d'authentification d'identité et la première requête d'obtention de contenu est utilisée pour obtenir des informations de contenu à afficher dans le gadget logiciel ; et
après la réception, par le dispositif électronique, d'une première réponse de succès d'obtention à la première requête d'obtention de contenu, afficher (36), par le dispositif électronique, la deuxième interface d'utilisateur sur la base des informations de contenu comprises dans la première réponse de succès d'obtention.

2. Procédé selon la revendication 1, comprenant en outre :
l'affichage, par le dispositif électronique, d'une troisième interface d'utilisateur, dans lequel la troisième interface d'utilisateur comprend une zone d'entrée de compte d'utilisateur ;
l'envoi, par le dispositif électronique, d'une première requête au premier serveur en réponse à une opération indiquant que l'utilisateur a fini d'entrer le premier compte d'utilisateur dans la zone d'entrée de compte d'utilisateur, dans lequel la première requête est utilisée par le dispositif électronique pour se connecter ou s'enregistrer auprès du premier serveur, et la première requête comprend le premier compte d'utilisateur ; et la réception, par le dispositif électronique, d'une réponse à la première requête et qui est envoyée par le premier serveur, dans lequel
la réponse à la première requête comprend le premier jeton d'authentification d'identité, et le premier jeton d'authentification d'identité est alloué par le premier serveur au dispositif électronique sur la base du premier compte d'utilisateur.

3. Procédé selon la revendication 1 ou 2, dans lequel après l'affichage, par le dispositif électronique, de la deuxième interface d'utilisateur, le procédé comprend en outre :
l'envoi, par le dispositif électronique, d'une deuxième demande d'obtention de contenu au deuxième serveur en réponse à une deuxième opération effectuée sur le gadget logiciel, dans lequel la deuxième requête d'obtention de contenu comprend le deuxième jeton d'authentification d'identité et des informations d'opération de la deuxième opération, et la deuxième requête d'obtention de contenu est utilisée pour obtenir des informations de contenu correspondant aux informations d'opération de la deuxième opération ; et
après la réception, par le dispositif électronique, d'une deuxième réponse de succès d'obtention à la deuxième requête d'obtention de contenu et qui est envoyée par le deuxième serveur, la mise à jour, par le dispositif électronique sur la base de la deuxième réponse de succès d'obtention, d'informations de contenu affichées dans le gadget logiciel, dans lequel la deuxième réponse de succès d'obtention comprend les informations de contenu correspondant aux informations d'opération de la deuxième opération.

4. Procédé selon la revendication 3, dans lequel si le deuxième jeton d'authentification d'identité compris dans la deuxième requête d'obtention de contenu est invalide, le procédé comprend en outre :
l'envoi, par le dispositif électronique, d'une deuxième requête d'obtention d'authentification au premier serveur après la réception, par le dispositif électronique, d'une réponse d'échec d'obtention de contenu envoyée par le deuxième serveur, dans lequel la deuxième requête d'obtention d'authentification comprend le premier jeton d'authentification d'identité, et la deuxième requête d'obtention d'authentification est utilisée pour obtenir de nouveau le deuxième jeton d'authentification d'identité utilisé pour accéder au deuxième serveur ; et
après la réception, par le dispositif électronique, d'une réponse à la deuxième requête d'obtention d'authentification et qui est envoyée par le premier serveur, envoyer de nouveau, par le dispositif électronique, la deuxième requête d'obtention de contenu au deuxième serveur, dans lequel une réponse à la deuxième requête d'obtention de contenu comprend un deuxième jeton d'authentification d'identité alloué de nouveau, et la deuxième requête d'obtention de contenu envoyée de nouveau comprend le deuxième jeton d'authentification d'identité alloué de nouveau et les informations d'opération de la deuxième opération.

5. Procédé selon l'une quelconque des revendications 1 à 4, dans lequel la première requête d'obtention d'authentification comprend en outre un identifiant du deuxième serveur.

6. Procédé d'affichage, comprenant :
la réception (32), par un premier serveur, d'une première requête d'obtention d'authentification envoyée par un dispositif électronique, dans lequel la première requête d'obtention d'authentification comprend un premier jeton d'authentification d'identité, le premier jeton d'authentification d'identité est alloué par le premier serveur au dispositif électronique sur la base d'un premier compte d'utilisateur d'un hôte APP d'un gadget logiciel, la première requête d'obtention d'authentification est utilisée pour obtenir un deuxième jeton d'authentification d'identité utilisé pour accéder à un deuxième serveur, le premier jeton d'authentification d'identité est associé au deuxième jeton d'authentification d'identité, le deuxième jeton d'authentification d'identité est généré sur la base d'un deuxième compte d'utilisateur d'un APP natif du gadget logiciel et alloué par le deuxième serveur, le premier compte d'utilisateur et le deuxième compte d'utilisateur sont associés à des comptes d'utilisateurs, le premier serveur est un serveur CP configuré pour fournir le contenu de l'hôte APP, et le deuxième serveur est serveur de fournisseur de contenu, CP, du gadget logiciel ;
la détermination, par le premier serveur, du deuxième jeton d'authentification d'identité sur la base du premier jeton d'authentification d'identité et d'une relation d'association pré-stockée entre un jeton d'authentification d'identité alloué par le premier serveur au dispositif électronique et un jeton d'authentification d'identité utilisé pour accéder au deuxième serveur ; et
l'envoi (33), par le premier serveur, d'une réponse à la première requête d'obtention d'authentification au dispositif électronique, dans lequel la réponse à la première requête obtention d'authentification comprend le deuxième jeton d'authentification d'identité.

7. Procédé selon la revendication 6, dans lequel la première requête d'obtention d'authentification comprend en outre un identifiant du deuxième serveur, et
la détermination, par le premier serveur, du deuxième jeton d'authentification d'identité sur la base du premier jeton d'authentification d'identité et d'une relation d'association pré-stockée entre un jeton d'authentification d'identité alloué par le premier serveur au dispositif électronique et un jeton d'authentification d'identité utilisé pour accéder au deuxième serveur comprend :
la détermination, par le premier serveur sur la base du premier jeton d'authentification d'identité et de la relation d'association pré-stockée entre le jeton d'authentification d'identité alloué par le premier serveur au dispositif électronique et le jeton d'authentification d'identité utilisé pour accéder au deuxième serveur, d'un ou de plusieurs jetons d'authentification d'identité associés au premier jeton d'authentification d'identité ; et
la détermination, par le premier serveur sur la base de l'identifiant du deuxième serveur, du deuxième jeton d'authentification d'identité à partir de l'un ou des plusieurs jetons d'authentification d'identité associés au premier jeton d'authentification d'identité.

8. Dispositif, dans lequel le dispositif comprend un processeur et une mémoire, dans lequel
la mémoire stocke des instructions de programme ; et
lorsque les instructions de programme sont exécutées, le dispositif est activé pour mettre en œuvre le procédé selon l'une quelconque des revendications 1 à *5.*

9. Dispositif, dans lequel le dispositif comprend un processeur et une mémoire, dans lequel
la mémoire stocke des instructions de programme ; et
lorsque les instructions de programme sont exécutées, le dispositif est activé pour mettre en œuvre le procédé selon la revendication 6 ou 7.

10. Puce, dans laquelle la puce est couplée à une mémoire dans un dispositif, de sorte que la puce invoque, lorsqu'elle est en cours d'exécution, des instructions de programme stockées dans la mémoire, pour mettre en œuvre le procédé selon l'une quelconque des revendications 1 à *5.*

11. Puce, dans laquelle la puce est couplée à une mémoire dans un dispositif, de sorte que la puce invoque, lorsqu'elle est en cours d'exécution, des instructions de programme stockées dans la mémoire, pour mettre en œuvre le procédé selon la revendication 6 ou 7.

12. Support d'enregistrement lisible par ordinateur, dans lequel le support d'enregistrement lisible par ordinateur comprend des instructions de programme, et lorsque les instructions de programme sont exécutées sur un dispositif, le dispositif est activé pour mettre en œuvre le procédé selon l'une quelconque des revendications 1 à *5.*

13. Support d'enregistrement lisible par ordinateur, dans lequel le support d'enregistrement lisible par ordinateur comprend des instructions de programme, et lorsque les instructions de programme sont exécutées sur un dispositif, le dispositif est activé pour mettre en œuvre le procédé selon la revendication 6 ou 7.
